(19)

Europäisches
Patentamt
European
Patent Office
Office européen
des brevets

(11)     **EP 4 648 500 A1**

(12)                    **EUROPEAN PATENT APPLICATION**
                     published in accordance with Art. 153(4) EPC

(43) Date of publication:
     **12.11.2025 Bulletin 2025/46**

(21) Application number: **23942805.5**

(22) Date of filing: **28.06.2023**

(51) International Patent Classification (IPC):
     *H04W 64/00* (2009.01)

(52) Cooperative Patent Classification (CPC):
     **H04W 64/00**

(86) International application number:
     **PCT/CN2023/103392**

(87) International publication number:
     **WO 2025/000288 (02.01.2025 Gazette 2025/01)**

(84) Designated Contracting States:
     **AL AT BE BG CH CY CZ DE DK EE ES FI FR GB
     GR HR HU IE IS IT LI LT LU LV MC ME MK MT NL
     NO PL PT RO RS SE SI SK SM TR**
     Designated Extension States:
     **BA**
     Designated Validation States:
     **KH MA MD TN**

(71) Applicant: **GUANGDONG OPPO MOBILE
     TELECOMMUNICATIONS
     CORP., LTD.
     Dongguan, Guangdong 523860 (CN)**

(72) Inventor: **ZHANG, Shichang
     Dongguan, Guangdong 523860 (CN)**

(74) Representative: **Taor, Simon Edward William et al
     Venner Shipley LLP
     200 Aldersgate
     London EC1A 4HD (GB)**

(54)     **RESOURCE MAPPING METHOD AND APPARATUS, AND TERMINAL, CHIP AND STORAGE
         MEDIUM**

(57)     Provided in the embodiments of the present application is a resource mapping method, comprising: mapping second-stage sidelink control information (SCI) in a physical sidelink shared channel (PSSCH) from a first resource unit in a time slot to at least one second resource unit comprising the first resource unit, wherein a demodulation reference signal of the PSSCH is present on a symbol where the first resource unit is located, and the at least one second resource unit does not overlap or partially overlaps with a symbol for transmitting a sidelink positioning reference signal (SL PRS); and mapping a portion of the PSSCH that does not include the second-stage SCI to at least one third resource unit that does not include the second-stage SCI. By means of the technical solution, the problem of how to transmit an SL PRS and a PSSCH in the same time slot when the SL PRS and sidelink communication are transmitted in a shared resource pool is specified, thereby ensuring effective reception of the PSSCH.

Map, starting from a first resource unit in a slot, second-stage SCI in a PSSCH to at least one second resource unit comprising the first resource unit, wherein a PSSCH DMRS exists on a symbol where the first resource unit is located, and the at least one second resource unit does not overlap or partially overlaps with symbols for sending a SL PRS — S1101

Map a portion, in the PSSCH, not comprising the second-stage SCI to at least one third resource unit that does not comprise the second-stage SCI — S1102

**FIG. 11**

EP 4 648 500 A1

**Description**

TECHNICAL FIELD

Embodiments of the present disclosure relate to the technical field of communication, and in particular, to a method and an apparatus for resource mapping, a terminal, a chip, and a storage medium.

BACKGROUND

In order to improve positioning accuracy, especially to realize the positioning of User Equipment (UE) located outside the coverage of the cellular network, the feasibility and performance research of the positioning technology based on a SideLink Positioning Reference Signal (SL PRS) has been completed.

When the SL PRS shares a resource pool with the Rel-16/17/18 sidelink communication, the UE needs to send the SL PRS and the Physical Sidelink Shared Channel (PSSCH) in the same slot. However, how to send the SL PRS and the PSSCH in the same slot is an unsolved problem.

SUMMARY

Embodiments of the present disclosure provide a method and an apparatus for resource mapping, a terminal, a chip, and a storage medium.

In the first aspect, the embodiments of the present disclosure provide a method for resource mapping. The method is applied to a terminal. The method includes the following operations. The second-stage Sidelink Control Information (SCI) in a Physical Sidelink Shared Channel (PSSCH) is mapped to at least one second resource unit including the first resource unit starting from the first resource unit in a slot. A demodulation reference signal (DMRS) of the PSSCH (PSSCH DMRS) exists on a symbol where the first resource unit is located, and the at least one second resource unit does not overlap or partially overlaps with symbols for sending a Sidelink Positioning Reference Signal (SL PRS). A portion, in the PSSCH, not including the second-stage SCI is mapped to at least one third resource unit that does not include the second-stage SCI.

In the second aspect, the embodiments of the present disclosure provide an apparatus for resource mapping. The apparatus includes the first mapping unit and the second mapping unit. The first mapping unit is configured to map, starting from the first resource unit in a slot, second-stage SCI in a PSSCH to at least one second resource unit including the first resource unit. A DMRS of the PSSCH (PSSCH DMRS) exists on a symbol where the first resource unit is located, and the at least one second resource unit does not overlap or partially overlaps with symbols for sending a SL PRS. The second mapping unit is configured to map a portion, in the PSSCH, not including the second-stage SCI to at least one third resource unit that does not include the second-stage SCI.

In the third aspect, the embodiments of the present disclosure provide a terminal. The terminal device includes a processor and a memory. The memory is configured to store a computer program, and the processor is configured to call and execute the computer program stored in the memory to perform the method for resource mapping described above.

In the fourth aspect, the embodiments of the present disclosure provide a chip for implementing the above-described method for resource mapping. Specifically, the chip includes a processor for calling and executing a computer program in a memory to cause a device on which the chip is mounted to perform the method for resource mapping described above.

In the fifth aspect, the embodiments of the present disclosure provide a computer readable storage medium. The computer readable storage medium is used for storing a computer program that causes a computer to perform the method for resource mapping described above.

In the sixth aspect, the embodiments of the present disclosure provide a computer program product. The computer program product includes computer program instructions that cause a computer to perform the method for resource mapping described above.

In the seventh aspect, the embodiments of the present disclosure provide a computer program. When the computer program is executed on a computer, the computer performs the method for resource mapping described above.

According to the above technical solutions, when the SL PRS and the sidelink communication are sent in the shared resource pool, it is specified how to send the SL PRS and the PSSCH in the same slot, so that it can be guaranteed that the PSSCH can be effectively received.

BRIEF DESCRIPTION OF THE DRAWINGS

The accompanying drawings described herein are intended to provide a further understanding of the present disclosure, and constitute a part of the present disclosure. The schematic embodiments of the present disclosure and the description thereof are intended to explain the present disclosure, and do not constitute an undue limitation of the present disclosure. In the drawings:

FIG. 1 is a schematic diagram of an example in which a part of symbols in one slot are used for Sidelink (SL) transmission.

FIG. 2 is a schematic diagram of an example of a slot structure of a PSCCH and a PSSCH.

FIG. 3 is a diagram of time domain positions of four DMRS symbols when there are 13 symbols for the PSSCH.

FIG. 4 is a schematic diagram of an example of a PSSCH DMRS frequency domain position.

FIG. 5 is a schematic diagram of an example of a resource pool of the PSCCH and the PSSCH in NR-V2X.

FIG. 6 is a schematic diagram of an example of a slot structure in an NR system.

FIG. 7 is a schematic diagram of an example of a comb size and a RE offset.

FIG. 8 is a schematic diagram of an example of an interlaced resource block (IRB).

FIG. 9 is a schematic diagram of an example of a frame structure based on IRBs.

FIG. 10 is a schematic diagram of an example of a Resource Block (RB) set.

FIG. 11 is a schematic flowchart of a method for resource mapping according to an embodiment of the present disclosure.

FIG. 12 is the first schematic diagram of an example of resource mapping according to an embodiment of the present disclosure.

FIG. 13 is the second schematic diagram of an example of resource mapping according to an embodiment of the present disclosure.

FIG. 14 is the third schematic diagram of an example of resource mapping according to an embodiment of the present disclosure.

FIG. 15 is a schematic diagram of an example of candidate time domain positions for sending the SL PRS in a resource pool according to an embodiment of the present disclosure.

FIG. 16 is a schematic diagram of a structural composition of an apparatus for resource mapping according to an embodiment of the present disclosure.

FIG. 17 is a schematic structural diagram of a communication device according to an embodiment of the present disclosure.

FIG. 18 is a schematic structural diagram of a chip according to an embodiment of the present disclosure.

## DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Based on the embodiments in the present disclosure, all other embodiments obtained by those skilled in the art without creative efforts fall within the scope of protection of the present disclosure.

The technical solutions of the embodiments of the present disclosure may be applied to various sidelink communication systems. In order to facilitate understanding of the technical solutions of the embodiments of the present disclosure, the related technologies of the embodiments of the present disclosure will be described below. The related technologies below may be arbitrarily combined with the technical solutions of the embodiments of the present disclosure as optional solutions, and all of them belong to the scope of protection of the embodiments of the present disclosure.

1. Slot structure in New Radio-Vehicle to Everything (NR-V2X)

In the NR-V2X, the PSSCH and the Physical Sidelink Control Channel (PSCCH) associated with the PSSCH are transmitted in the same slot, and the PSCCH occupies two or three time domain symbols. The time domain resources in the NR-V2X are allocated in the allocation granularity of slot, and the starting point and length of the time domain symbols for sidelink transmission in one slot are configured through parameters *sl-startSLsymbols* and *sl-lengthSLsymbols.* The last symbol in these symbols is used as the Guard Period (GP), and only the remaining time domain symbols can be used by the PSSCH and PSCCH. However, if a Physical Sidelink Feedback Channel (PSFCH) transmission resource is configured in the slot, the time domain symbol used for the PSFCH transmission and the Automatic Gain Control (AGC) and GP symbols before the symbol used for the PSFCH transmission cannot be occupied by the PSSCH and the PSCCH.

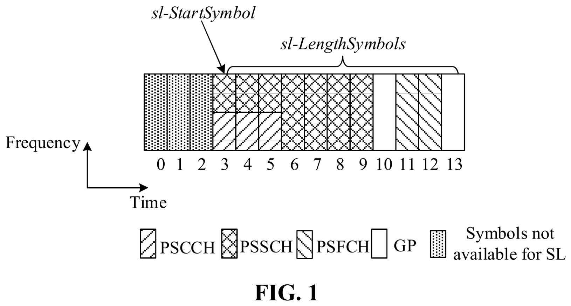

FIG. 1 is a schematic diagram of a part of symbols in one slot used for SL transmission. As illustrated in FIG. 1, if it is configured by the network that *sl-StartSymbol* = 3 and *sl-LengthSymbols* = 11, it means that 11 time domain symbols starting from the symbol with index 3 in a slot may be used for SL transmission. There are the PSFCH transmission resources in this slot. The symbols 11 and 12 are occupied by the PSFCH. The symbol 11 serves as an AGC symbol of the PSFCH, and symbols 10 and 13 serve as GPs, respectively. Time domain symbols available for the PSSCH transmission are symbols 3 to 9. Three time domain symbols, i.e., symbols 3, 4 and 5, are occupied by the PSCCH. Symbol 3 usually serves as an AGC symbol.

In addition to the PSCCH and PSSCH, the PSFCH may also exist in a SL slot in the NR-V2X. In a slot, the first Orthogonal Frequency Division Multiplexing (OFDM) symbol is fixedly used for AGC. On the AGC symbol, the UE duplicates the information sent on the second symbol. One symbol is left at the end of the slot for transmitting-receiving conversion, which is used for the UE to convert from the sending (or receiving) state to the receiving (or sending) state. In the remaining OFDM symbols, two or three OFDM symbols starting from the second SL symbol may be occupied by the PSCCH. In the frequency domain, the number of Physical Resource Blocks (PRBs) occupied by the PSCCH is within a subband range of the PSSCH. If the number of PRBs occupied by the PSCCH is less than the size of a subchannel of the PSSCH, or the frequency domain resources of the PSSCH include multiple subchannels, the OFDM symbol on which the PSCCH is located may be frequency division multiplexed by the PSCCH and the PSSCH.

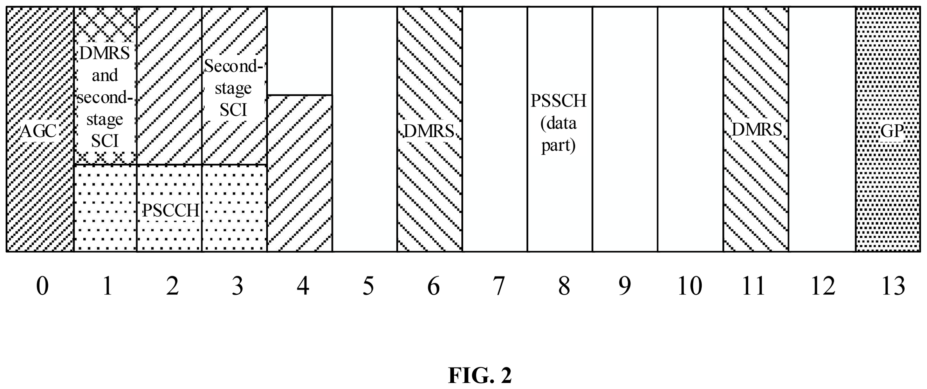

The PSSCH is used to carry second-stage Sidelink Control Information (SCI) and Sidelink Shared Channel (SL-SCH). Two second-stage SCI formats, i.e., SCI format 2-A and SCI format 2-B, are defined in 3GPP R16. The SCI format 2-B is suitable for a multicast communication manner in which SL Hybrid Automatic Repeat reQuest (HARQ) feedback is performed based on distance information. The SCI format 2-A is suitable for other scenarios, such as unicast, multicast, and broadcast that do not require SL HARQ feedback, a unicast communication manner that requires SL HARQ feedback, a multicast communication manner that requires feedback of an ACKnowledgement (ACK) or a Negative ACKnowledgement (NACK), etc. A second-stage SCI format, i.e., SCI format 2-C, is additionally introduced in 3GPP R17 for indicating a reference resource set and triggering signaling in a specific case. The modulation symbols of the second-stage SCI are mapped starting from the symbol where the first PSSCH Demodulation Reference Signal (DMRS) is located in an order of the frequency domain followed by the time domain, and the symbol is multiplexed with the Resource Element (RE) of DMRS in the interleaved manner, and as illustrated in FIG. 2, the modulation symbols of the second-stage SCI cannot be mapped to the REs where the Phase-Tracking Reference Signals (PT-RSs) are located.

In the SL communication system, the UE autonomously selects resources or determines the transmission resources based on the SL resource scheduling of the network, which may cause different UEs to send the PSCCH on the same time-frequency resource. In order to ensure that the receiver can detect at least one PSCCH in the case that resources for the PSCCH conflict, the design scheme of PSCCH DMRS randomization is used in LTE-V2X. Specifically, when the UE sends the PSCCH, the UE may randomly select one value from {0, 3, 6, 9} as the cyclic shift of the DMRS, and if the PSCCH DMRSs sent by multiple UEs on the same time-frequency resource use different cyclic shifts, the receiving UE may still detect at least one PSCCH through orthogonal DMRSs. For the same purpose, three PSCCH DMRS frequency domain Orthogonal Covering Codes (OCCs) are introduced in the NR-V2X for random selection by the sending UE. As shown in Table 1, the i-th bit of the OCC is applied to the i-th DMRS RE in the RB, thereby achieving the effect of distinguishing different UEs.

Table 1 OCC of PSCCH DMRS

| OCC Index | OCC | | |
|---|---|---|---|
| | $i = 0$ | $i = 1$ | $i = 2$ |
| 0 | 1 | 1 | 1 |
| 1 | 1 | $e^{j2/3\pi}$ | $e^{-j2/3\pi}$ |
| 2 | 1 | $e^{-j2/3\pi}$ | $e^{j2/3\pi}$ |

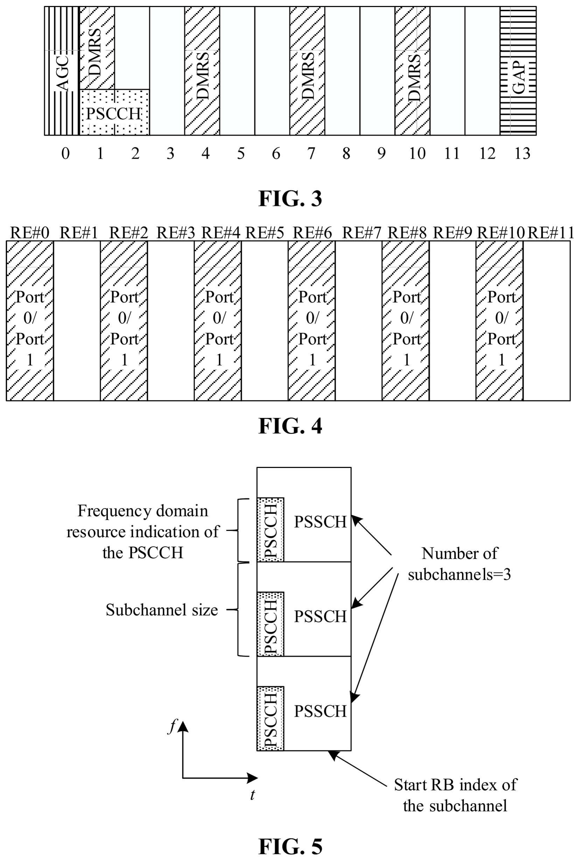

The DMRS of PSSCH in the NR-V2X borrows from the design in the New Radio (NR) Uu interface, i.e., uses multiple time-domain PSSCH DMRS patterns. In a resource pool, the number of available DMRS patterns is related to the number of PSSCH symbols in the resource pool. For a specific number of PSSCH symbols (including the first AGC symbol) and the number of PSCCH symbols, the available DMRS patterns and the position of each DMRS symbol in the pattern are shown in Table 2. FIG. 3 illustrates a schematic diagram of the time domain positions of four DMRS symbols when there are 13 symbols for the PSSCH.

Table 2 Numbers and positions of DMRS symbols under different numbers of PSSCH and PSCCH symbols

| Number of PSSCH symbols (including first AGC symbol) | DMRS symbol position (relative to the first AGC symbol position) | | | | | |
| --- | --- | --- | --- | --- | --- | --- |
| | The number of PSCCH symbols is 2 | | | The number of PSCCH symbols is 3 | | |
| | Number of DMRS Symbols | | | Number of DMRS Symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If multiple time domain DMRS patterns are configured in the resource pool, the specific used time domain DMRS pattern is selected by the sending UE and indicated in the first-stage SCI. Such a design allows a high-speed moving UE to select a high-density DMRS pattern, thereby ensuring the accuracy of channel estimation, while for a low-speed moving UE, a low-density DMRS pattern may be adopted, thereby improving spectral efficiency.

The generation method of the PSSCH DMRS sequence is almost identical to the generation method of the PSCCH DMRS sequence, and the only difference is that in the initialization formula $c_{init}$ of the pseudo-random sequence $c(m)$, $N_{ID} = \sum_{i=0}^{L-1} p_i \cdot 2^{L-1-i}$, $P_i$ is the i-th bit CRC of the PSCCH scheduling the PSSCH, and L = 24, which is the number of bits of the PSCCH CRC.

The NR Physical Downlink Shared Channel (PDSCH) and the Physical Uplink Shared Channel (PUSCH) support two frequency domain DMRS patterns, i.e., DMRS frequency domain type 1 and DMRS frequency domain type 2. There are two different types of single DMRS symbol and double DMRS symbol for each frequency domain type. Single-symbol DMRS frequency domain type 1 supports 4 DMRS ports, and single-symbol DMRS frequency domain type 2 may support 6 DMRS ports. In the case of dual DMRS symbols, the number of supported ports is doubled. However, as illustrated in FIG. 4, in the NR-V2X, since only two DMRS ports at most are needed to be supported for the PSSCH, only the single-symbol DMRS frequency domain type 1 is supported.

2. Determination of NR-V2X frequency domain resources

Similar to the LTE-V2X, the frequency domain resources in the NR-V2X resource pool are also consecutive, and the allocation granularity of the frequency domain resources is also subchannels. The number of PRBs included in one sub-channel is {10, 12, 15, 20, 50, 75, 100}. The size of the minimum subchannel is 10 PRB, which is much larger than the size of the minimum subchannel of 4 PRB in the LTE-V2X. The main reason is that the frequency domain resources of the PSCCH in the NR-V2X are located within the first subchannel of the PSSCH associated with the PSCCH, the size of the frequency domain resources of the PSCCH is less than or equal to the size of one subchannel of the PSSCH, while the time domain resources of the PSCCH occupy 2 or 3 OFDM symbols, and if the size configuration of the subchannel is relatively small, it will result in limited available resources for the PSCCH, increased code rate, and reduced detection performance of the PSCCH. In the NR-V2X, the size of the PSSCH subchannel is independently configured from the size of frequency domain resources of the PSCCH, but it is necessary to ensure that the size of frequency domain resources of the PSCCH is less than or equal to the size of the subchannel of the PSSCH.

The following configuration parameters in the NR-V2X resource pool configuration information are used to determine frequency domain resources in the resource pool for the PSCCH and PSSCH.

　　1) The size of subchannel (*sl-SubchannelSize*): it indicates the number of consecutive PRBs included in a subchannel in the resource pool, of which the value range is {10, 12, 15, 20, 50, 75, 100} PRBs.
　　2) The number of subchannels (*sl-NumSubchannel*): it indicates the number of subchannels included in the resource pool.
　　3) The start RB index of the subchannel (*sl-StartRB-Subchannel*): it indicates the start PRB index of the first subchannel in the resource pool.

4) The number of PRBs (*sl-RB-Number*): it indicates the number of consecutive PRBs included in the resource pool.
5) The frequency domain resource indication of the PSCCH (*sl-FreqResourcePSCCH*): it indicates the size of frequency domain resources of PSCCH, of which the value range is {10, 12, 15, 20, 25} PRBs.

When the UE determines a resource pool for PSSCH transmission or PSSCH reception, the frequency domain resources included in the resource pool are *sl-NumSubchannel* consecutive subchannels starting from the PRB indicated by *sl-StartRB-Subchannel.* If finally, the number of PRBs included in the *sl-NumSubchannel* consecutive subchannels is less than the number of PRBs indicated by *sl-RB-Number,* the remaining PRBs cannot be used for PSSCH transmission or reception.

In the NR-V2X, the frequency domain starting position of the first subchannel of the PSCCH is aligned with the frequency domain starting position of the first subchannel of the PSSCH associated with the PSCCH, so the starting position of each subchannel of the PSSCH is the possible frequency domain starting position of the PSCCH, and the frequency domain range of the resource pool for the PSCCH and the PSSCH may be determined according to the above parameters, as illustrated in FIG. 5.

In the NR-V2X, the PSCCH is used to carry following SL control information related to resource monitoring:

1) priority of scheduled transmission;
2) frequency domain resource allocation indicating the number of frequency domain resources of the PSSCH in the current slot scheduled by the PSCCH, and the number of frequency domain resources and the starting positions of at most two reserved retransmission resources;
3) time domain resource allocation indicating time domain positions of at most two retransmission resources;
4) reference signal pattern of the PSSCH;
5) second-stage SCI format;
6) second-stage SCI code rate offset;
7) the number of PSSCH DMRS ports;
8) Modulation and Coding Scheme (MCS);
9) MCS form indication;
10) the number of PSFCH symbols;
11) resource reservation period for reserving resources for sending another Transport Block (TB) in the next period, the information bit field not existing if inter-TB resource reservation is not activated in the resource pool configuration; and
12) reserved bits of 2 to 4 bits, the specific number of bits being configured by the network or pre-configured.

Since the PSCCH is always sent within one slot with the scheduled PSSCH, and the starting position of the PRB occupied by the PSCCH is the starting position of the first subchannel of the scheduled PSSCH, the time-frequency domain starting position of the scheduled PSSCH is not explicitly indicated in the SCI format 1-A.

3. Determination of time domain resources (slots) in the NR-V2X

In the NR-V2X, the transmission of PSCCH/PSSCH is based on the slot level, that is, only one PSCCH/PSSCH can be transmitted in a slot, and multiple PSCCHs/PSSCHs can be transmitted in a slot by Time-Division Multiplexing (TDM). The PSCCHs/PSSCHs between different users may be transmitted in a slot by Frequency Division Multiplexing (FDM). The time domain resources of the PSSCH in the NR-V2X are in the granularity of slot, but unlike LTE-V2X where the PSSCH occupies all the time domain symbols in a subframe, the PSSCH in the NR-V2X may occupy a part of symbols in a slot. The main reason is that in the LTE system, uplink or downlink transmission is also in the granularity of subframe, so SL transmission is also in the granularity of subframe (special subframes in the Time Division Duplexing (TDD) system are not used for SL transmission). In the NR system, flexible slot structure is used, that is, a slot includes both uplink symbols and downlink symbols, so that more flexible scheduling can be realized and the delay can be reduced.

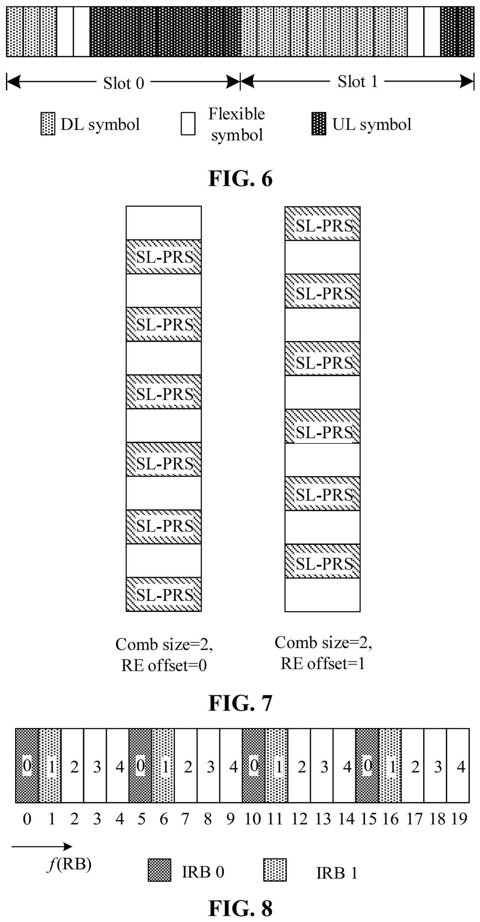

FIG. 6 is a schematic diagram of an example of a slot structure in the NR system. As illustrated in FIG. 6, a slot may include Downlink (DL) symbols, Uplink (UL) symbols, and Flexible symbols. The DL symbols are located at the starting position of the slot, the UL symbols are located at the end position of the slot, flexible symbols are between the DL symbols and the UL symbols, and the number of various symbols in each slot is configurable.

The SL transmission system may share the carrier with the cellular system, and in this case, the SL transmission can only use the UL transmission resources of the cellular system. For the NR-V2X, if it is still needed that the SL transmission occupies all time domain symbols in a slot, the network needs to configure a slot in which all symbols are UL symbols for the SL transmission, which will greatly affect the UL-DL data transmission in the NR system and reduce the performance of the system. Therefore, in the NR-V2X, it is supported that a part of the time domain symbols in a slot is used for SL transmission, that is, a part of the UL symbols in a slot is used for SL transmission. In addition, it is considered that the AGC symbol and the GP symbol are included in the SL transmission, and if the number of UL symbols available for the SL transmission is lesser, after the AGC symbol and GP symbol are removed, there are fewer symbols available for transmitting valid data, so the resource utilization rate is very low. Therefore, the number of time domain symbols occupied by the SL transmission in the NR-V2X is at least 7 (including the GP symbol). When the SL transmission system uses a dedicated carrier, there is no problem of sharing transmission resources with other systems, and all symbols in the slot may be configured to be used for the SL transmission.

As described above, in the NR-V2X, the starting point and length of the time domain symbols used for the SL transmission in a slot are configured through the parameters *sl-StartSymbol* and *sl-LengthSymbols.* The last symbol in the time domain symbols used for the SL transmission is used as the GP, and only the remaining time domain symbols can be used by the PSSCH and PSCCH. However, if a PSFCH transmission resource is configured in the slot, the time domain symbol used for the PSFCH transmission and the AGC and GP symbols before the symbol used for the PSFCH transmission cannot be occupied by the PSSCH and the PSCCH.

In the NR-V2X system, the time domain resources in the resource pool are also indicated by the bitmap. It is considered that the flexible slot structure in the NR system, the length of the bitmap is also extended, and the supported range of the bitmap length is [10: 160]. The method for determining the slot position belonging to the resource pool in a System Frame Number (SFN) period by using the bitmap is the same as that in the LTE-V2X, but there are two differences as follows.

1) The total number of slots included in a SFN period is $10240 \times 2^{\mu}$. The parameter $\mu$ is related to the size of the subcarrier spacing.

2) If at least one time domain symbol among the time domain symbols $Y, Y+1, Y+2, ..., Y+X-1$ included in a slot is not configured as an UL symbol by TDD-UL-DL-ConfigCommon signaling of the network, the slot cannot be used for the SL transmission. $Y$ and $X$ represent *sl-StartSymbol* and *sl-LengthSymbols,* respectively.

The manner for determining the slot position belonging to the resource pool in a SFN period may include, for example, the following operations.

In operation 1, in the SFN period, slots, not belonging to the resource pool, including synchronization slots and slots that cannot be used for SL transmission, etc., are removed. The remaining slots are represented as a remaining slot set, and the remaining slots are renumbered as $(l_0, l_1, \cdots, l_{(10240 \times 2^{\mu} - N_{S\_SSB} - N_{nonSL} - 1)})$.

$N_{S\_SSB}$ indicates the number of synchronization slots in a SFN period. The synchronization slots are determined according to the synchronization-related configuration parameters, which is related to the period of transmission of the Synchronization Signal Block (SSB) and the number of transmission resources of the SSB configured in the period, and the like. $N_{nonSL}$ represents the number of slots that do not conform to the configuration of the starting point and number of UL symbols in a SFN period. If at least one time domain symbol among the time domain symbols $Y, Y+1, Y+2, ..., Y+X-1$ included in a slot is not semi-statically configured as an UL symbol, the slot cannot be used for the SL transmission. $Y$ and $X$ represent *sl-StartSymbol* and *sl-LengthSymbols,* respectively.

In operation 2, the number of reserved slots and the corresponding time domain position are determined.

If the number of slots in the remaining slot set cannot be divisible by the length of the bitmap, the number of reserved slots and the corresponding time domain positions need to be determined. For example, if a slot $l_r (0 \leq r < 10240 \times 2^{\mu} - N_{S\_SSB} - N_{nonSL})$ satisfies the condition in the Equation (1), the slot is a reserved slot:

$$r = \left\lfloor \frac{m \cdot (10240 \times 2^{\mu} - N_{S\_SSB} - N_{nonSL})}{N_{reserved}} \right\rfloor \qquad (1)$$

$N_{reserved} = (10240 \times 2^{\mu} - N_{S\_SSB} - N_{nonSL}) \ mod \ L_{bitmap}$ represents the number of reserved slots and $L_{bitmap}$ represents the length of the bitmap, $m = 0,...,N_{reserved} - 1$.

In operation 3, the reserved slots are removed from the remaining slot set. The set of the remaining slots is represented as a logical slot set. All slots in the slot set are slots available for the resource pool, and the slots in the logical slot set are renumbered to be $\left( t_0^{SL}, t_1^{SL}, ..., t_{T_{max}-1}^{SL} \right)$. Here, $T_{max} = 10240 \times 2^{\mu} - N_{S\_SSB} - N_{nonSL} - N_{reserved}$.

In operation 4, a slot belonging to the resource pool in the logical slot set is determined according to the bitmap.

The bitmap in the resource pool configuration information is $(b_0, b_1, ..., b_{L_{bitmap}-1})$. For a slot $t_k^{SL} \left( 0 \leq k < \left( 10240 \times 2^{\mu} - N_{S\_SSB} - N_{nonSL} - N_{reserved} \right) \right)$ in the logical slot set, when $b_{k'} = 1$ is satisfied, the slot is a slot belonging to the resource pool. Here, $k' = k \ mod \ L_{bitmap}$.

In operation 5, the slots, belonging to the resource pool, determined in the operation 4 are sequentially renumbered to be $t_i'^{SL}$. Here, $i \in \{0, 1, ..., T'_{max} - 1\}$, and $T'_{max}$ represents the number of slots included in the resource pool.

## 4. DL-based positioning

In the DL-based positioning, DL positioning reference signal (PRS) configurations of at most four positioning frequency layers may be provided for the UE. The following configuration parameters of the PRS signal are provided in the parameter structure of each positioning frequency layer:

1) subcarrier spacing of the PRS signal;
2) the cyclic prefix (CP) length of the PRS signal;
3) frequency domain resource bandwidth of the PRS, the value of this parameter being the number of PRBs allocated to the PRS signal, the minimum value of PRS resource bandwidth being 24 PRBs, the granularity being 4 PRBs, and the maximum value being 272 PRBs;
4) the starting frequency position of the frequency domain of the PRS resource, this parameter defining the index number of the starting PRB allocated for the PRS signal in the frequency domain, the index number of the PRB being defined with respect to PointA of the PRS;
5) frequency domain reference point (PointA) of the PRS signal; and
6) Comb size (Comb-N) of the PRS signal.

The PRS parameters configured in each positioning frequency layer are applied to all PRS resources included in the positioning frequency layer. That is to say, in a positioning frequency layer, all PRS signals from multiple different Transmission and Reception Points (TRPs) will use the same subcarrier spacing and Cyclic Prefix (CP) length, the same comb size, are sent on the same frequency subband, and occupy exactly the same bandwidth. Such a design may support the UE to simultaneously receive and measure PRS signals, from multiple different TRPs, sent at the same frequency point.

The parameters of the TRP layer include an ID parameter for uniquely identifying the positioning TRP, a physical cell ID of the TRP, a NR Cell Global Identifier (NCGI) of the TRP, and an Absolute Radio Frequency Channel Number (ARFCN) of the TRP. Up to two DL PRS resource sets may be configured in each TRP layer. The following parameters are configured for the DL PRS resource set in the layer, and these parameters are applied to all DL PRS resources included in this resource set. The configured parameters include:

1) DL PRS resource set identifier (ID) (*nr-DL-PRS-ResourceSetID*).
2) transmission period and slot offset of the DL PRS (*dl-PRS-Periodicity-and-ResourceSetSlotOffset*): this parameter defines the time domain transmission behavior of all DL PRS resources included in the DL PRS resource set. The minimum configured transmission period of the DL PRS may be 4 ms, and the maximum transmission period is 10240 ms. The configuration of DL PRS supports flexible subcarrier spacing, including 15KHz, 30KHz, 60KHz and 120KHz. The configured range of the transmission period value of DL PRS may be the same in different subcarrier spacing cases. FIG. 7 illustrates a schematic diagram with a comb size of 2 and RE offsets of 0 and 1.
3) repetition factor of the DL PRS resource (*dl-PRS-ResourceRepetitionFactor*): this parameter defines the number of repetition transmissions of a PRS resource in each PRS period. The repetition transmission of the same DL PRS resource may be used by the UE to aggregate the DL PRS signal energy transmitted multiple times, thereby increasing the coverage distance of the DL PRS and increasing the positioning accuracy. In the FR2 system, the repetition transmission of the DL PRS resource may be used by the UE for a reception beam sweep operation. The UE may use different reception beams to receive repetition transmissions of the same DL PRS resource to find an optimal match of TRP transmission beam and UE reception beam. On the other hand, repetition transmission of the DL PRS resource increases the overhead of PRS. In the specification of 3GPP NR R16, the repetition factor of the DL PRS resource takes values of 1, 2, 4, 6, 8, 16 and 32.
4) Time gap of repetition transmission of DL PRS resource (*dl-PRS-ResourceTimeGap*): this parameter defines the number of slots between two consecutive repetition transmissions of the same PRS resource.
5) Muting configuration of DL PRS: this parameter is used to define that DL PRS signals are not sent (called Muting) on certain allocated time-frequency resources. Muting means that the DL PRS signal is not sent on all allocated time-frequency resources, but is intentionally not sent on some specified time-frequency resources. The purpose of this is to avoid collision with other signals such as SSB, on the one hand, and to avoid interference between signals sent by different TRPs, on the other hand, for example, intentionally turning off transmission of the DL PRS of a certain TRP at some time, so as to enable the UE to receive DL PRS signals from a distant TRP. The muting operation of PRS will be explained in detail in the subsequent description, so the muting operation of PRS will not be described in detail.
6) Number of OFDM symbols occupied by the DL PRS resource (*dl-PRS-NumSymbols*): this parameter defines the number of OFDM symbols allocated for a DL PRS resource within a slot.

As mentioned above, all parameters configured in a DL PRS resource set in this layer configuration are applied to all DL PRS resources included in the resource set. Therefore, all DL PRS resources in the same DL PRS resource set have the same transmission period, the same number of repetition transmissions, and occupy the same number of OFDM symbols.

Each DL PRS resource may be configured with the following parameters:

1) a DL PRS resource identifier (ID) (*nr-DL-PRS-ResourceID*);
2) sequence ID of the DL PRS (*dl-PRS-SequenceID*);
3) Starting frequency domain resource unit offset of the DL PRS (*dl-PRS-CombSizeN-AndReOffset*): this parameter defines the frequency domain resource unit offset value, used for resource mapping, on the first allocated OFDM symbol in a slot, of the DL PRS resource. Based on this parameter and the relative offset value specified in TS 38.211, the UE may determine the frequency domain resource unit offset value, used for resource mapping, on each OFDM symbol;
4) resource slot offset of the DL PRS (*dl-PRS-ResourceSlotOffset*): this parameter defines the slot offset relative to the DL PRS resource set. This parameter may determine the slot position at which each DL PRS resource is located;
5) OFDM symbol offset of the DL PRS (*dl-PRS-ResourceSymbolOffset*): this parameter defines the time-frequency resource allocation position, in a slot, of a DL PRS resource. It indicates the index number of the starting OFDM symbol of the DL PRS resource in a slot; and
6) QCL information of DL PRS (*dl-PRS-QCL-Info*): this parameter provides Quasi-Co-Location information (QCL) of the DL PRS signal.

5. Sidelink Over Unlicensed Spectrum (SL-U)

When performing SL transmission on unlicensed spectrum, SL transmission needs to meet specific regulatory requirements, including the requirements of minimum Occupied Channel Bandwidth (OCB) and maximum Power Spectral Density (PSD). For the requirement of OCB, when the UE uses the channel for data transmission, the occupied channel bandwidth is not less than 80% of the channel bandwidth. For the requirement of maximum PSD, the power for sending by the UE cannot be more than 10 dBm per 1 MHz. In order to meet the requirements of OCB and PSD regulations, SL sending over unlicensed spectrum needs to use an Interlaced Resource Block (IRB) structure. One IRB includes N Resource Blocks (RBs) discrete in the frequency domain, M IRBs are included totally in the band range, and the RBs included in the m-th IRB are {m, M + m, 2M + m, 3M + m, ...}.

FIG. 8 is a schematic diagram of an example of an IRB. As illustrated in FIG. 8, the system bandwidth includes 20 RBs, includes 5 IRBs (i.e., M = 5), and each IRB includes 4 RBs (i.e., N = 4). The frequency domain intervals of two adjacent RBs belonging to the same IRB are the same, that is, 5 RBs apart. The numbers in the boxes in the figure represent IRB indexes.

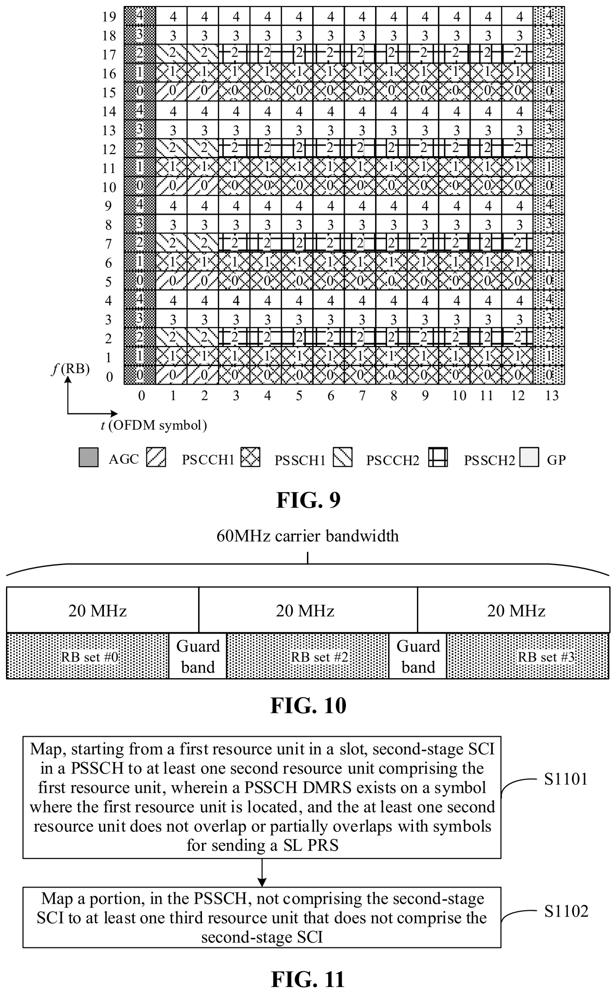

In the SL-U system, if IRB-based resource allocation granularity is used, channels such as PSCCH and PSSCH in the SL-U system should be based on the IRB structure. In this case, the frame structure of the SL-U system is illustrated in FIG. 9, and the numbers in the boxes in FIG. 9 represent the IRB index. FIG. 9 is a schematic diagram of a frame structure in which only PSCCH and PSSCH are included in a slot, but PSFCH is not included. The bandwidth illustrated in the figure includes 20 RBs, 5 IRB resources are configured, that is, M = 5, each IRB resource includes 4 RBs, and the numbers in the boxes represent the IRB index. In FIG. 9, the system configures that one IRB resource is occupied by the PSCCH occupies, two OFDM symbols are occupied in the time domain, the PSSCH takes IRB as granularity, the first symbol in the slot is an AGC symbol, and the last symbol is a GP symbol. In the figure, IRB # 0 and IRB # 1 are occupied by the PSSCH1, and IRB # 0 is occupied by the PSCCH1 corresponding to the PSSCH1. The IRB # 2 is occupied by the PSSCH2, and the IRB # 2 is also occupied by the PSCCH2 corresponding to the PSSCH2. It should be noted that in FIG. 9, for the sake of simplification, the resources occupied by the second-stage SCI and the resources occupied by the PSCCH DMRS and the PSSCH DMRS are not drawn.

On the unlicensed spectrum, the UE accesses the channel through Listen Before Talk (LBT). The LBT operation takes 20MHz as granularity in the frequency domain, and every 20 MHz is called an RB Set. A carrier may include multiple RB sets, and as illustrated in FIG. 10, there is a guard interval between the RB sets.

On the unlicensed spectrum, the UE needs to perform the LBT firstly, and the channel is accessed after the LBT passes. However, the time for the UE to complete the LBT is uncertain, and if the UE is restricted to start sending from the starting point of one slot, the UE may miss the transmission opportunity because it fails to complete the LBT before this time. Therefore, in the SL-U, it is considered to add a transmission starting point in a slot, that is, multi-start transmission. For example, the additional starting point may be the 3rd or 4th OFDM symbol within the slot.

6. Positioning based on SL

In the 3GPP R-17, the 3GPP Radio Access Network (RAN) conducts research on "NR positioning enhancement" and "scenarios and requirements for in-coverage, partial coverage, and out-of-coverage NR positioning use cases". The "scenarios and requirements for in-coverage, partial coverage, and out-of-coverage NR positioning use cases" research focuses on V2X and public safety use cases. In addition, the 3GPP SA1 working group has also formulated requirements for "ranging-based services" and formulated positioning accuracy requirements for the use of the Industrial Internet of Things (IIoT) in out-of-coverage scenarios. The 3GPP needs to research and develop SL positioning solutions to support the use cases, scenarios, and requirements identified in these activities.

In order to improve positioning accuracy, especially to realize the positioning of UE located outside the coverage of the cellular network, 3GPP completed the feasibility and performance study of positioning technology based on the SL PRS in the early stage of Rel-18. Solutions based on the SL positioning (including ranging/direction finding) in the NR system will be standardized next, specifically, including the following operations:

1) standardizing SL PRS: the SL PRS uses a frequency domain structure based on comb (all RE mapping mode is not excluded), uses a sequence format based on pseudo-random sequences, takes the existing DL-PRS sequences as the design starting point, and supports SL PRS bandwidth of up to 100 MHz at FR1;
2) standardizing the measurements for supporting the SL RTT, SL-AOA and SL-TDOA positioning methods;
3) standardizing the resource allocation solution of the SL PRS, including resource allocation solution 1 and resource allocation solution 2. The solution 1 corresponds to that the network allocates SL PRS resources, and the solution 2 corresponds to that UE autonomously selects SL PRS resources. It is supported that a resource pool is shared by the SL PRS and Rel-16/17/18 SL communication, and the dedicated resource pool for the SL PRS is supported. For the solution 2, resource selection based on channel monitoring, and/or random resource selection, congestion control, and/or resource selection based on UE coordination needs to be studied and standardized; and
4) standardizing open-loop power control mechanism of SL PRS transmission, etc.

The related technologies/terms related to the embodiments of the present disclosure have been briefly described above, and the following embodiments will not be repeatedly described.

It should be understood that the terms "system" and "network" are often used interchangeably herein. Herein, the term "and/or" is only used for describing an association relationship between association objects, and means that there may be three relationships, for example, A and/or B, which may mean that A exists alone, A and B exist simultaneously, and B exists alone. In addition, the character "/" in the present disclosure generally indicates that there is an "or" relationship between the association objects. It should also be understood that the "indication" mentioned in the embodiments of the present disclosure may be a direct indication, an indirect indication, or used for describing an association relationship. For example, A indicates B, which may mean that A directly indicates B, for example, B may be acquired by A. It may also mean that A indicates B indirectly, for example A indicates C, and B may be acquired through C. It may also indicate that there is an association relationship between A and B. It should also be understood that "correspondence" mentioned in the embodiments of the present disclosure may indicate that there is a direct correspondence or indirect correspondence between the two objects, may indicate that there is an association relationship between the two objects, or may indicate a relationship between indicating and being indicated, configuring and being configured, or the like. It should also be understood that the "predefined" or "predefined rules" mentioned in the embodiments of the present disclosure may be implemented by storing corresponding codes, tables, or other methods that may be used to indicate relevant information in advance in devices (for example, including the terminal device and the network device), and the present disclosure does not limit specific implementations thereof.

It should also be understood that the terminal in the embodiments of the present disclosure may refer to an access terminal, User Equipment (UE), a subscriber unit, a subscriber station, a mobile station, a mobile stage, a remote station, a remote terminal, a mobile device, a user terminal, a terminal device, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network, or a terminal device in a future evolution network, or the like.

In order to improve the positioning accuracy, especially to realize the positioning of terminals located outside the coverage of the cellular network, the feasibility and performance research of the positioning technology based on a SL PRS has been completed. When the SL PRS shares a resource pool with the Rel-16/17/18 sidelink communication, the terminal needs to send the SL PRS and the PSSCH in the same slot. However, how to send the SL PRS and the PSSCH in the same slot is an unsolved problem.

In view of this, the present disclosure provides a method and an apparatus for resource mapping, a terminal, a chip, and a storage medium. The method may be applicable to licensed spectrum and unlicensed spectrum. The method may be performed by, for example, a terminal, or may be performed by a chip, a chip system, or a circuit disposed in the terminal, and the embodiments of the present disclosure are not limited thereto. For convenience of description, description will be made below taking execution by a terminal as an example.

In the method, the terminal may map the second-stage SCI in a PSSCH to at least one second resource unit including the first resource unit starting from the first resource unit in a slot. A DMRS of PSSCH (hereinafter referred to as PSSCH DMRS) exists on a symbol where the first resource unit is located. The at least one second resource unit does not overlap or partially overlaps with symbols for sending a SL PRS. Further, the terminal may map a portion, in the PSSCH, not including the second-stage SCI to at least one third resource unit that does not include the second-stage SCI. According to the above technical solutions, when the SL PRS and the sidelink communication are sent in the shared resource pool, it is specified how to send the SL PRS and the PSSCH in the same slot, so that it can be guaranteed that the PSSCH can be effectively received.

It should be noted that the "symbol" mentioned in the embodiments of the present disclosure refers to an "OFDM symbol" without causing ambiguity. In other words, the "symbol" and the "OFDM symbol" in the embodiments of the present disclosure may be replaced with each other without causing ambiguity.

In order to facilitate understanding of the technical solutions of the embodiments of the present disclosure, the technical solutions of the present disclosure will be described in detail below with reference to specific examples. The above related technologies may be arbitrarily combined with the technical solutions of the embodiments of the present disclosure as optional solutions, and all of them belong to the scope of protection of the embodiments of the present disclosure. Embodiments of the present disclosure include at least some of the following.

FIG. 11 is a schematic flowchart of a method for resource mapping according to an embodiment of the present disclosure. As illustrated in FIG. 11, the method for resource mapping may include the following operations.

In operation S1101, the second-stage SCI in a PSSCH is mapped to at least one second resource unit including the first resource unit starting from the first resource unit in a slot. The PSSCH DMRS exists on a symbol where the first resource unit is located. The at least one second resource unit does not overlap or partially overlaps with symbols for sending a SL PRS.

The operation that the second-stage SCI in the PSSCH is mapped to at least one (i.e., one or more) second resource unit including the first resource unit may be understood to be that the complex-valued modulation symbols of the PSSCH are mapped to at least one second resource unit including the first resource unit.

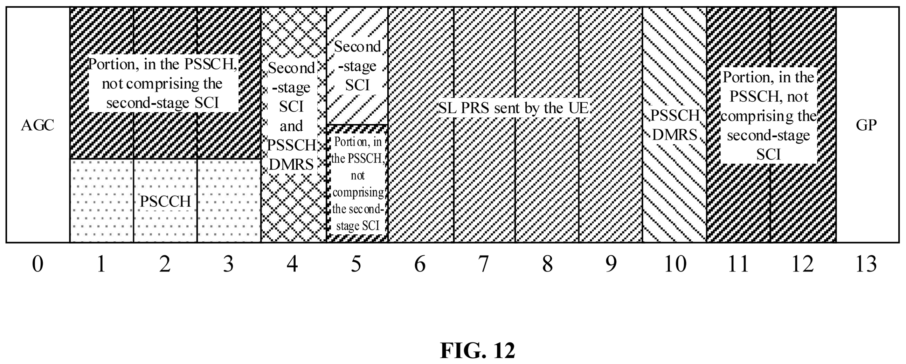

As one implementation, for example, the first PSSCH DMRS in the slot may exist on the symbol where the first resource unit is located. That is, the second-stage SCI in the PSSCH may be mapped starting from the symbol on which the first PSSCH DMRS is located in the slot. Taking FIG. 12 as an example (numbers 0 to 13 in the figure represent symbol indexes), the symbol on which the first PSSCH DMRS is located in the slot is symbol # 4, so the second-stage SCI in the PSSCH may be mapped starting from symbol # 4.

In the present embodiment, the at least one second resource unit does not overlap or partially overlaps with the symbols for sending the SL PRS. The at least one second resource unit not overlapping with the symbols for sending the SL PRS may be further understood to be that there is no intersection between the at least one second resource unit and the symbol used for sending the SL PRS, or may be further understood to be that the at least one second resource unit does not occupy the symbols for sending the SL PRS. The at least one second resource unit partially overlapping with the symbols for sending the SL PRS may be understood to be that there is an intersection between the at least one second resource unit and the symbol used for sending the SL PRS, for example, a part of the at least one second resource unit may occupy a part of the symbols for sending the SL PRS.

In some embodiments, the operation of mapping, starting from the first resource unit in the slot, the second-stage SCI in the PSSCH to at least one second resource unit including the first resource unit includes the following operation. The second-stage SCI in the PSSCH is mapped, starting from the first resource unit in the slot, to the at least one second resource unit including the first resource unit in an order of frequency domain followed by time domain and in an ascending index order. That is, the terminal may map the second-stage SCI in the PSSCH to one or more consecutive second resource units starting from the first resource unit in the slot. Taking FIG. 12 as an example, for example, the terminal may map the second-stage SCI in the PSSCH to multiple consecutive second resource units including the first resource unit starting from the first resource unit in symbol # 4. In FIG. 12, the multiple consecutive second resource units exist on symbol # 4 and symbol # 5.

In some embodiments, the operation of mapping, starting from the first resource unit in the slot, the second-stage SCI in the PSSCH to the at least one second resource unit including the first resource unit includes the following operation. The second-stage SCI in the PSSCH is preferentially mapped to at least one fourth resource unit including the first resource unit starting from the first resource unit in the slot. At least one of the PSSCH DMRS or a PSCCH exists on a symbol where the fourth resource unit is located. The at least one second resource unit includes the at least one fourth resource unit. That is, the terminal may preferentially map the second-stage SCI in the PSSCH to symbol, on which at least one of the PSSCH DMRS or the PSCCH exists, in the slot.

As one implementation, the terminal may perform mapping of the second-stage SCI in the PSSCH, for example, according to the following operations 1 to 3.

In operation 1, the second-stage SCI in the PSSCH is mapped to the symbol on which the PSSCH DMRS exists starting from the first resource unit in the slot. For example, the second-stage SCI may be mapped, starting from the first symbol, on which the PSSCH DMRS exists, in the slot, to the symbol, on which the PSSCH DMRS exists, in the slot.

In operation 2, if the second-stage SCI remains after the mapping is performed in the manner of the operation 1, the remaining second-stage SCI is mapped to the symbol, on which the PSCCH exists, in the slot. For example, when the second-stage SCI remains, the second-stage SCI may be mapped, starting from the first symbol on which the PSCCH exists, in the slot, to the symbol, on which the PSCCH exists, in the slot. It is satisfied that the mapped resource unit is not occupied by the second-stage SCI that has been mapped in the operation 1.

In operation 3, if the second-stage SCI still remains after the mapping is performed in the manners of the operation 1 and the operation 2, whether there is an unoccupied resource unit is judged starting from the first symbol in the slot, and then the remaining second-stage SCI is mapped to the unoccupied resource unit in the slot.

It should be noted that the "first symbol" mentioned in the embodiments of the present disclosure refers to the first one (such as symbol # 2 in FIG. 12, FIG. 13, and FIG. 14) of symbols, not including the AGC, in the slot.

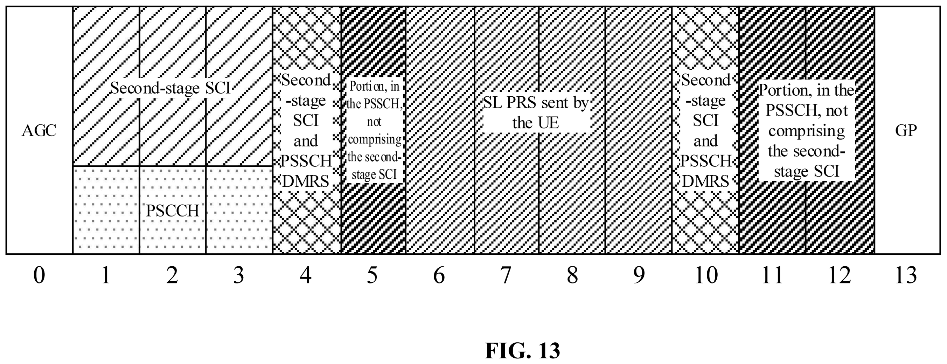

Taking FIG. 13 as an example (numbers 0 to 13 in the figure represent symbol indexes), based on the above the operations 1 to 3, the terminal may firstly map the second-stage SCI in the PSSCH to symbols, on which the PSSCH DMRS exists, in the slot (such as symbol # 4 and symbol # 10 in FIG. 13). If the second-stage SCI remains, the remaining second-stage SCI may be mapped to symbols, on which the PSCCH exists, in the slot (such as symbol # 1, symbol # 2, and symbol # 3 in FIG. 13). If the second-stage SCI still remains, whether there is an unoccupied resource unit is judged starting from the first symbol in the slot, and then the remaining second-stage SCI is mapped to the unoccupied resource unit.

According to the method of the present embodiment, on the one hand, the decoding performance of the second-stage SCI and measurement accuracy related to positioning can be improved by preferentially mapping the second-stage SCI to the symbol on which the PSSCH DMRS exists. On the other hand, since the PSCCH and the SL PRS cannot exist in the same symbol at the same time, that is, the SL PRS cannot be mapped to the symbol on which the PSCCH exists, resource utilization can be improved and resource waste is avoided by preferentially mapping the second-stage SCI to the symbol on which the PSCCH exists (for example, when there is no available resource left on the symbol where the PSSCH DMRS is located, the second-stage SCI may be preferentially mapped to the symbol on which the PSCCH exists).

In some embodiments, the second resource unit is not occupied by a PSSCH DMRS, a PSCCH, a PSCCH DMRS (a DMRS of the PSCCH), or a PT-RS. That is, in the process of mapping the second-stage SCI in the PSSCH to the second resource unit, it is also necessary to satisfy that the second resource unit is not occupied by the PSSCH DMRS, the PSCCH, the PSCCH DMRS (the DMRS of the PSCCH), or the PT-RS.

In some embodiments, the method may further include the following operation. A code rate offset of the second-stage SCI is adjusted to cause the at least one second resource unit for mapping the second-stage SCI to not overlap with the symbols for sending the SL PRS. That is, In order to prevent the second resource unit to which the second-stage SCI is mapped from overlapping with the symbols for sending the SL PRS, the code rate offset of the second-stage SCI may be adjusted. For example, in the rate matching process of the second-stage SCI, the code rate offset ($\beta_{offset}^{SCI2}$) of the second-stage SCI selected by the terminal may ensure that ultimately, the second-stage SCI cannot occupy the symbols for sending the SL PRS, thereby avoiding collisions between resources for the second-stage SCI and the SL PRS.

In some embodiments, the method may further include the following operation. In a case that the at least one second resource unit does not overlap with the symbols for sending the SL PRS, remaining second-stage SCI is dropped if remaining second-stage SCI exists after mapping the second-stage SCI to the at least one second resource unit.

That is, on the premise that the at least one second resource unit does not overlap with the symbols for sending the SL PRS, if the resource for the redundant second-stage SCI that will overlap with the symbols for sending the SL PRS exists in the process of mapping the second-stage SCI in a prescribed stage (such as in an ascending index order), the terminal may drop the redundant second-stage SCI to ensure that the second-stage SCI does not occupy the symbols for sending the SL PRS, thereby avoiding collision between the resources for the second-stage SCI and the SL PRS, and simplifying the rate matching of the second-stage SCI.

In some embodiments, in a case that the at least one second resource unit partially overlaps with the symbols for sending the SL PRS, a mapped SL PRS in an overlapped portion may be covered by the second-stage SCI in the second resource unit. That is, when a collision occurs between the resources for the second-stage SCI and the SL PRS, the terminal may use the second-stage SCI to cover the mapped SL PRS to simplify the mapping method of the second-stage SCI.

As an example, the terminal may map the SL PRS to the symbols for sending the SL PRS before mapping the second-stage SCI. Subsequently, the terminal may perform mapping of the second-stage SCI in a prescribed stage (for example, in an ascending index order). If the second-stage SCI overlaps (collides) with the mapped SL PRS in the process of mapping of the second-stage SCI, the terminal may use the second-stage SCI to cover the mapped SL PRS.

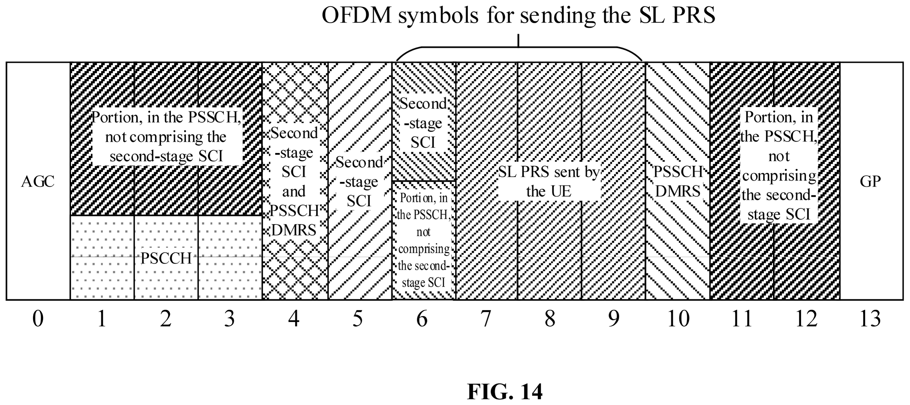

Taking FIG. 14 as an example (numbers 0 to 13 in the figure represent symbol indexes), firstly, the SL PRS may be mapped to the symbols for sending the SL PRS (that is, symbol # 6 to symbol # 9), and then, the second-stage SCI may be mapped in the ascending index order starting from symbol # 4. On symbol # 6, the second-stage SCI overlaps with the symbols for sending the SL PRS, and in this case, the second-stage SCI in the overlapped portion may cover the mapped SL PRS in symbol # 6.

In some embodiments, in a symbol corresponding to the overlapped portion, a mapped SL PRS that is not covered by the second-stage SCI in the at least one second resource unit is allowed to be covered by the portion, in the PSSCH, not including the second-stage SCI.

As indicated by symbol # 6 in FIG. 14, the portion, in the PSSCH, not including the second-stage SCI may be mapped to symbol # 6 to which the second-stage SCI and the SL PRS have been mapped. In this case, the portion, in the PSSCH, not including the second-stage SCI may cover the mapped SL PRS in the symbol # 6. In this way, it is beneficial to avoid the influence of the second-stage SCI on the SL PRS.

In some embodiments, the method may further include the following operation. The SL PRS is mapped to the symbols for sending the SL PRS before mapping, starting from the first resource unit in the slot, the second-stage SCI in the PSSCH to the at least one second resource unit including the first resource unit.

For example, before mapping the second-stage SCI to the at least one second resource unit, the terminal may determine the symbols for sending the SL PRS, and map the SL PRS to the determined symbols for sending the SL PRS.

In the embodiments of the present disclosure, the terminal may determine the symbols for sending the SL PRS in, for example, any one of the following first manner to the third manner. Here, determining the symbols for sending the SL PRS may also be understood as determining the time domain positions of the symbols for sending the SL PRS. It may be understood that in the embodiments of the present disclosure, the symbols for sending the SL PRS determined by the terminal is selected from the time-frequency resources indicated by the SL grant.

As one implementation, the time domain positions of the symbols for sending the SL PRS may be determined based on the number of symbols for sending the SL PRS and the starting symbol position of the symbols for sending the SL PRS. In other words, the time domain positions of the symbols for sending the SL PRS may be determined (or the symbols for sending the SL PRS may be determined) by determining the number (for example, which is denoted as M) of symbols for sending the SL PRS denoted asand the starting symbol position (for example, which is denoted as S) of the symbols for sending the SL PRSdenoted as.

Taking FIG. 12 as an example, the number M of symbols for sending the SL PRS determined by the terminal is 4, and the starting symbol position S of the symbols for sending the SL PRS determined by the terminal is the position where symbol # 6 is located. In this case, the time domain positions of the symbols for sending the SL PRS determined by the terminal are the positions where the symbol # 6 to the symbol # 9 are located. In other words, the symbols for sending the SL PRS determined by the terminal are the symbol # 6 to the symbol # 9.

Hereinafter, the first manner to the third manner for the terminal determining the symbols for sending the SL PRS will be described, respectively.

First manner

The time domain positions of the symbols for sending the SL PRS are determined by a Media Access Control (MAC) layer or a physical layer of the terminal from candidate time domain positions in a resource pool, or are determined by the physical layer of the terminal from candidate time domain positions in the resource pool based on the first number of symbols. The candidate time domain positions are preconfigured or configured by a network. The first number of symbols is the minimum number of symbols determined by the MAC layer for sending the SL PRS.

In some embodiments, multiple candidate time domain positions may be preconfigured or configured by the network in the resource pool. For example, multiple starting symbol positions S for sending the SL PRS may be preconfigured or configured by the network in the resource pool. For each starting symbol position S, the corresponding number M of symbols for sending the SL PRS may be preconfigured or configured by the network.

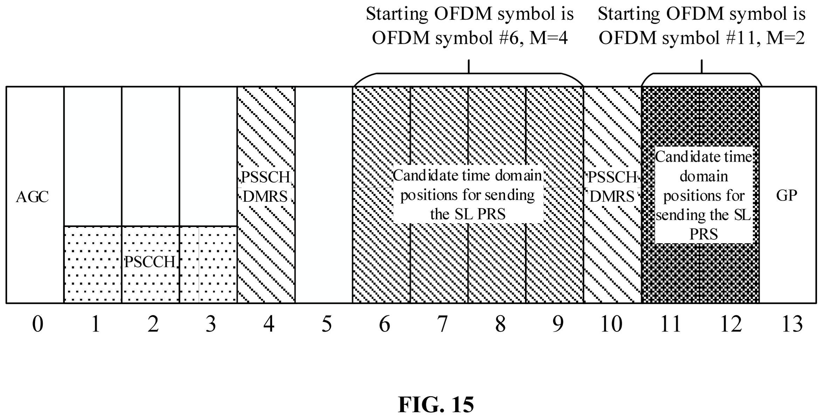

Taking FIG. 15 as an example, two starting symbol positions S for sending the SL PRS are pre-configured or configured by the network in the slot, which are the positions where symbol # 6 and symbol # 11 are located, respectively. When the position where the symbol # 6 is located is taken as the starting symbol position S, the corresponding number M of symbols for sending the SL PRS is 4. When the position where the symbol # 11 is located is taken as the starting symbol position S, the corresponding number M of symbols for sending the SL PRS is 2.

In some embodiments, symbols corresponding to candidate time domain positions do not include symbols for sending the second-stage SCI to avoid collisions between resources for the second-stage SCI and the SL PRS. For example, in FIG. 15, the candidate time domain positions for sending the SL PRS (that is, positions where symbols # 6 to # 9, # 11, and # 12 are located) do not include symbols for sensing the second-stage SCI.

As an example, the time domain positions of the symbols for sending the SL PRS may be determined by the MAC layer of the terminal from candidate time domain positions in the resource pool. Taking FIG. 15 as an example, the MAC layer of the terminal may select, for example, positions where symbols # 6 to # 9 are located as time domain positions of symbols for sending the SL PRS, or the MAC layer of the terminal may select positions where symbols # 11 to # 12 are located as time domain positions of symbols for sending the SL PRS.

In some embodiments, in a case that the time domain positions of the symbols for sending the SL PRS are determined by the MAC layer of the terminal, the time domain positions of the symbols for sending the SL PRS determined by the MAC layer do not include a symbol that is available for sending the second-stage SCI, to avoid collision between resources for the second-stage SCI and the SL PRS resource.

As another example, the time domain positions of the symbols for sending the SL PRS may be determined by the physical layer of the terminal from candidate time domain positions in the resource pool. Taking FIG. 15 as an example, for example, the physical layer of the terminal may select the positions where symbols # 6 to # 9 are located as the time domain positions of the symbols for sending the SL PRS, or the physical layer of the terminal may select the positions where symbols # 11 to # 12 are located as the time domain positions of the symbols for sending the SL PRS.

As yet another example, the time domain positions of the symbols for sending the SL PRS may be determined by the physical layer of the terminal from candidate time domain positions in the resource pool based on the first number of symbols. The first number of symbols is the minimum number of symbols for sending the SL PRS, and the first number of symbols may be determined by, for example, the MAC layer of the terminal and indicated to the physical layer of the terminal. In this case, the number M of symbols for sending the SL PRS determined by the physical layer of the terminal needs to be greater than or equal to the first number of symbols. Taking FIG. 15 as an example, it is assumed that the first number of symbols determined by the MAC layer is 4, since M needs to be greater than or equal to 4, the physical layer of the terminal may select the positions where symbols # 6 to # 9 are located as the time domain positions of the symbols for sending the SL PRS.

It should be noted that, in some scenarios, the first number of symbols may be determined by other higher layers of the terminal. For example, the first number of symbols may be determined by a SideLink Positioning Protocol (SLPP) layer of the terminal and indicated to the physical layer of the terminal.

It should also be noted that, in some scenarios, the terminal may determine the symbols for sending the SL PRS by another higher layer of the terminal (such as the SLPP layer) from the candidate time domain positions in the resource pool.

Second manner

The time domain positions of the symbols for sending the SL PRS are determined by the MAC layer or the physical layer of the terminal, or are determined by the physical layer of the terminal based on the first number of symbols. The PSCCH, PSSCH DMRS, PSCCH DMRS, or mapped second-stage SCI does not exist on the symbols for sending the SL PRS. The first number of symbols is the minimum number of symbols determined by the MAC layer for sending the SL PRS.

As one implementation, in the second manner, the terminal may firstly perform mapping of the second-stage SCI, and then determine the time domain positions of the symbols for sending the SL PRS. In other words, in the second manner, the time domain positions of the symbols for sending the SL PRS may be determined after mapping the second-stage SCI to the at least one second resource unit.

As an example, the time domain positions of the symbols for sending the SL PRS may be determined by the MAC layer of the terminal. For example, the MAC layer of the terminal may firstly determine a SL grant, if there is a Sidelink Grant occurring in the PSSCH/SL PRS occasion, the MAC layer of the terminal may determine the time domain positions of the symbols for sending the SL PRS (in other words, the MAC layer of the terminal may determine the symbols for sending the SL PRS) in the PSSCH occasion and/or SL PRS occasion where the sidelink grant exists. The symbols for sending the SL PRS determined by the MAC layer of the terminal needs to satisfy that the PSCCH, the PSSCH DMRS, the PSCCH DMRS, or the mapped second-stage SCI does not exist on the symbols for sending the SL PRS.

As another example, the time domain positions of the symbols for sending the SL PRS may be determined by the physical layer of the terminal. For example, the MAC layer of the terminal may firstly determine a SL grant, and send (indicate) the determined SL grant to the physical layer of the terminal. Accordingly, the physical layer of the terminal may determine (select) the symbols for sending the SL PRS from the time-frequency resources indicated by the SL grant. The symbols for sending the SL PRS determined by the physical layer of the terminal needs to satisfy that the PSCCH, the PSSCH DMRS, the PSCCH DMRS, or the mapped second-stage SCI does not exist on the symbols for sending the SL PRS.

As yet another example, the time domain positions of the symbols for sending the SL PRS may be determined by the physical layer of the terminal based on the first number of symbols. The first number of symbols is the minimum number of symbols for sending the SL PRS, and the first number of symbols may be determined by, for example, the MAC layer of the terminal and indicated to the physical layer of the terminal. In this case, the number M of symbols for sending the SL PRS determined by the physical layer of the terminal needs to be greater than or equal to the first number of symbols.

For example, the MAC layer of the terminal may firstly determine a SL grant and send (indicate) the determined SL grant to the physical layer of the terminal. Accordingly, the physical layer of the terminal may determine (select) the symbols for sending the SL PRS from the time-frequency resources indicated by the SL grant. The symbols for sending the SL PRS determined by the physical layer of the terminal must satisfy that the determined number M of symbols for sensing the SL PRS is greater than or equal to the first number of symbols, and the PSCCH, the PSSCH DMRS, the PSCCH DMRS, or the mapped second-stage SCI does not exist on the symbols for sending the SL PRS.

It should be noted that, in some scenarios, the first number of symbols may be determined by other higher layers of the terminal. For example, the first number of symbols may be determined by the SLPP layer of the terminal and indicated to the physical layer of the terminal.

It should also be noted that, in some scenarios, the terminal may determine the symbols for sending the SL PRS by another higher layer of the terminal (such as the SLPP layer). The determined symbols for sending the SL PRS needs to satisfy that the PSCCH, the PSSCH DMRS, the PSCCH DMRS, or the mapped second-stage SCI does not exist on the symbols for sending the SL PRS.

According to the method of the present embodiment, since the symbol(s) for sending the SL PRS may be determined after the second-stage SCI is mapped, the complexity of the resource mapping for the second-stage SCI can be reduced, and the flexibility of resource selection for the SL PRS can be increased. Further, since the terminal avoids the mapped second-stage SCI when determining the symbol(s) for sending the SL PRS, the collision between the resources for the second-stage SCI and the SL PRS can be avoided.

Third manner

The time domain positions of the symbols for sending the SL PRS are determined by the physical layer of the terminal. Alternatively, the number of symbols for sending the SL PRS is determined by the MAC layer of the terminal, and the starting symbol position of the symbols for sending the SL PRS is determined by the physical layer of the terminal based on the number. The number is less than or equal to the number of consecutive symbols available for sending the SL PRS in the slot.

As an example, the time domain positions of the symbols for sending the SL PRS may be determined by the physical layer of the terminal. For example, after receiving the SL grant indicated by the MAC layer, the physical layer of the terminal may determine (select) the symbols for sending the SL PRS from the time-frequency resources indicated by the SL grant.

As another example, the number M of symbols for sending the SL PRS may be determined by the MAC layer of the terminal, and the starting symbol position S of the symbols for sending the SL PRS may be determined by the physical layer of the terminal based on M.

For example, after determining the value of M, the MAC layer of the terminal may indicate the SL grant and the value of M together to the physical layer of the terminal, so that the physical layer of the terminal may determine the positions of M consecutive symbols for sending the SL PRS in the slot based on the SL grant and the value of M. That is, after the MAC layer of the terminal determines the value of M, the physical layer of the terminal may determine the starting symbol position S of the symbols for sending the SL PRS based on the value of M.

In some scenarios, the above value of M may be determined by other higher layers of the terminal. For example, the value of M may be determined by the SLPP layer of the terminal and indicated to the physical layer of the terminal. Accordingly, the physical layer of the terminal may determine the positions of M consecutive symbols for sending the SL PRS in the slot, or determine the starting symbol position S of the symbols for sending the SL PRS, based on the SL grant and the value of M indicated by the SLPP layer.

In some embodiments, the value of M determined by the MAC layer should be less than or equal to the number of consecutive symbols available for sending the SL PRS in the slot. Here, the number of consecutive symbols available for sending the SL PRS in the slot may be, for example, the number of consecutive symbols that do not include the PSSCH DMRS and the PSCCH in the current slot. For example, in FIG. 15, there may be at most 5 consecutive symbols (i.e., symbol # 5 to symbol # 9) that do not include the PSSCH DMRS and the PSCCH in a slot, then the value of M determined by the MAC layer should be less than or equal to 5, so that it can be ensured that the physical layer of the terminal can select M consecutive symbols, satisfying the condition, for sending SL PRS, in the current slot.

In some embodiments, the PSCCH, the PSSCH DMRS, or the PSCCH DMRS does not exist on the symbols for sending the SL PRS. That is, the symbols for sending the SL PRS finally determined by the physical layer needs to satisfy that the PSCCH, the PSSCH DMRS, or the PSCCH DMRS does not exist on the determined M consecutive symbols for sending the SL PRS.

It should be noted that, in some scenarios, the terminal may determine the symbols for sending the SL PRS by another higher layer of the terminal (such as the SLPP layer). The determined symbols for sending the SL PRS needs to satisfy that the PSCCH, the PSSCH DMRS, the PSCCH DMRS, or the mapped second-stage SCI does not exist on the symbols for sending the SL PRS.

In some embodiments, a time domain position of the PSSCH DMRS in the slot is determined based on at least one pattern, of the PSSCH DMRS, preconfigured or configured by a network, in the resource pool. In the at least one pattern, of the DMRS of the PSSCH, preconfigured or configured by the network, N symbols that do not include the PSCCH exist between symbols on which the first PSSCH DMRS and the second PSSCH DMRS are located. N is an integer, greater than or equal to 0, preconfigured or configured by the network.

For example, it is assumed that K (K is a positive integer) patterns of the PSSCH DMRS is preconfigured or configured by the network in the resource pool, then in the K patterns, there is at least one pattern that satisfies the following feature: N symbols that do not include the PSCCH exist between symbols on which the first PSSCH DMRS and the second PSSCH DMRS in the pattern are located. In other words, the at least one pattern, of the PSSCH DMRS, preconfigured or configured by the network in the resource pool cannot include N symbols, not including the PSCCH, after the first PSSCH DMRS.

In some embodiments, the N symbols that do not include the PSCCH do not overlap with the symbols for sending the SL PRS. In other words, the N symbols that do not include the PSCCH do not include the symbols for sending the SL PRS. The N symbols that do not include the PSCCH may be used for mapping the second-stage SCI. Therefore, the relatively sufficient position can be reserved for the second-stage SCI, which is beneficial to avoid overlap between the symbol for the second-stage SCI and the symbols for sending the SL PRS, and thus avoid collision between resources for the second-stage SCI and the SL PRS.

In operation S1102, a portion, in the PSSCH, not including the second-stage SCI is mapped to at least one third resource unit that does not include the second-stage SCI.

Here, the portion, in the PSSCH, not including the second-stage SCI may also be understood as other complex-valued modulation symbols in the PSSCH except the complex-valued modulation symbols of the second-stage SCI. The operation of mapping the portion, in the PSSCH, not including the second-stage SCI to the at least one (i.e., one or more) third resource unit that does not include the second-stage SCI may be understood as mapping other complex-valued modulation symbols in the PSSCH except the complex-valued modulation symbols of the second-stage SCI to the at least one third resource unit that does not include the second-stage SCI.

In some embodiments, the third resource unit does not overlap with the symbols for sending the SL PRS. That is, when the terminal maps the portion, in the PSSCH, not including the second-stage SCI, the terminal cannot occupy the symbols for sending the SL PRS.

In some embodiments, when mapping the portion, in the PSSCH, not including the second-stage SCI, if both the mapped second-stage SCI and the SL PRS exist in a symbol, the terminal may cover the mapped SL PRS in the symbol with the portion, in the PSSCH, not including the second-stage SCI. In other words, the portion, in the PSSCH, not including the second-stage SCI may be mapped to a symbol to which the second-stage SCI and the SL PRS have been mapped. In this case, the portion, in the PSSCH, not including the second-stage SCI may cover the mapped SL PRS in the symbol, thereby avoiding the influence of the second-stage SCI on the SL PRS.

In some embodiments, the third resource unit is not occupied by the PSSCH DMRS, the PSCCH, the PSCCH DMRS, or the PT-RS. That is, in the process of mapping the portion, in the PSSCH, not including the second-stage SCI to the third resource unit, it is also necessary to satisfy that the third resource unit is not occupied by the PSSCH DMRS, the PSCCH, the PSCCH DMRS, or the PT-RS.

In some embodiments, the slot further includes the first-stage SCI. At least one of the first-stage SCI or the second-stage SCI includes a bit field for indicating a format of the second-stage SCI.

In an example, the terminal may indicate the format of the second-stage SCI in the embodiments of the present disclosure through a "2nd-stage SCI format" field in the first-stage SCI. For example, the terminal may set the "2nd-stage SCI format" field in the first-stage SCI to "11" to indicate the format(for example, which is denoted as SCI format 2-D) of the second-stage SCI in the embodiments of the present disclosure.

In another example, the terminal may indicate the format of the second-stage SCI in the embodiments of the present disclosure through a reserved field in the first-stage SCI. For example, the terminal may set a specific bit in the reserved field in the first-stage SCI to "1" to indicate the format of the second-stage SCI in the embodiments of the present disclosure.

In another example, the terminal may jointly indicate the format of the second-stage SCI in the embodiments of the present disclosure through the bit fields in the first-stage SCI and the second-stage SCI. In this case, the bit field for indicating the format of the second-stage SCI in the second-stage SCI may include, for example, the last bit field in the second-stage SCI.

For example, the terminal may, for example, set the "2nd-stage SCI format" field in the first-stage SCI to "10" (indicating that the format of the second-stage SCI is SCI format 2-C). Further, the terminal may set the "Providing/Requesting indicator" field in the sent second-stage SCI to "1" and set a specific bit in the last bit field (Padding bits) to "1", to indicate the format of the second-stage SCI to be the SCI format 2-D.

As described above, the embodiments of the present disclosure provide a method for resource mapping in a PSSCH in the SL positioning. According to the method, when an SL PRS and the SL communication are sent in a shared resource pool, effective reception of the PSSCH can be ensured, and the influence on subsequent resource selection of the terminal can be reduced as much as possible.

The method for resource mapping according to the embodiments of the present disclosure has been described above with reference to FIG. 11 to FIG. 15. In order to facilitate understanding of the embodiments of the present disclosure, several possible implementation manners of the method for resource mapping applicable to the embodiments of the present disclosure are described below.

It should be noted that the "first symbol" hereinafter refers to the first one (such as symbol # 2 in FIG. 12, FIG. 13, and FIG. 14) of symbols, not including the AGC, in the slot. In the mapping operation described in the embodiments of the present disclosure, the resource element used for the PSSCH, the PSCCH, the PSCCH DMRS, the PSSCH DMRS, or the PT-RS in the first symbol in the slot should be copied to a symbol before the first symbol, that is, a symbol (such as symbol # 1 in FIG. 12, FIG. 13, and FIG. 14) used for AGC.

It should also be noted that in the embodiments of the present disclosure, the format of the second-stage SCI sent in the same slot as the SL PRS is different from the SCI formats 2-A, 2-B, and 2-C defined before the 3GPP release Rel-18, and this new format of the second-stage SCI is referred to as SCI format 2-D.

As an example, the embodiments of the present disclosure may include the following implementation solutions for resource mapping.

First solution

In the first solution, the starting point S (that is, the starting symbol position S of the symbols for sending the SL PRS in the above embodiments) of the OFDM symbols for sending the SL PRS in the resource pool and the corresponding number M (that is, the number M of symbols for sending the SL PRS in the above embodiments) of consecutive OFDM symbols may be configured by the network (hereinafter referred to as being configured for short) or pre-configured. The second-stage SCI in the PSSCH may be mapped, starting from the first PSSCH DMRS in the slot, to an OFDM symbol for which the SL PRS is not configured. The portion, in the PSSCH, not including the second-stage SCI may be mapped to a resource not occupied by the SL PRS and the second-stage SCI.

In some embodiments, the starting point of the OFDM symbols available for sending the SL PRS in a slot in the resource pool is configured or preconfigured. One or more starting points S of OFDM symbols available for sending the SL PRS in a slot may be configured or preconfigured. For each starting point S, the corresponding number M of consecutive OFDM symbols for sending the SL PRS is configured or preconfigured. In some embodiments, any one configured or preconfigured starting point S and the corresponding M OFDM symbols cannot include the OFDM symbol available for sending the PSCCH in the current slot.

As an example, as illustrated in FIG. 15, two starting points of OFDM symbols available for sending the SL PRS are configured in a slot, which are OFDM symbol # 6 and OFDM symbol # 11, respectively, and the corresponding numbers M of consecutive OFDM symbols for sending the SL PRS are 4 and 2, respectively.

In the first solution, the UE may determine (select) the starting point for sending the SL PRS and the corresponding number of consecutive OFDM symbols from the starting points S and the corresponding numbers M of consecutive OFDM symbols configured/preconfigured in the resource pool for sending the SL PRS, for example, in one of the following determination methods.

Determination method 1-1: The MAC layer of the UE firstly determines a sidelink grant. For example, the UE may obtain the sidelink grant by receiving the indication information from the base station, or may obtain the sidelink grant by autonomous resource selection. The sidelink grant is used at least for sending the PSSCH.

If there is a sidelink grant occurring in the PSSCH occasion and/or SL PRS occasion, the MAC layer of the UE may select, from the at least one of PSSCH occasion or SL PRS occasion in which the sidelink grant exists, a starting point S and a corresponding number M of OFDM symbols for sending the SL PRS. For example, for the PSSCH occasion and/or SL PRS occasion in which the sidelink grant exists, the MAC layer of the UE may determine, from one or more starting points S and corresponding numbers M of OFDM symbols configured/preconfigured in the resource pool, a starting point S and the corresponding number M of OFDM symbols for sending the SL PRS.

In some embodiments, the OFDM symbol(s) selected by the MAC layer for sending the SL PRS should not overlap with the OFDM symbol(s) available for sending the second-stage SCI. In other words, the OFDM symbol(s) selected by the MAC layer for sending the SL PRS does not include OFDM symbol(s) available for sending the second-stage SCI.

Determination method 1-2: The MAC layer of the UE firstly determines the sidelink grant. For example, the UE may obtain the sidelink grant by receiving the indication information from the base station, or may obtain the sidelink grant by autonomous resource selection. The sidelink grant is used at least for sending the PSSCH. Subsequently, the MAC layer of the UE may send (indicate) the determined sidelink grant to the physical layer of the UE, so that the physical layer of the UE may determine the starting point S and the corresponding number M of OFDM symbols for sending the SL PRS according to the configuration/preconfiguration in the resource pool. For example, for the at least one of PSSCH occasion or SL PRS occasion in which the sidelink grant exists, the physical layer of the UE may determine, from one or more starting points S and corresponding numbers M of OFDM symbols configured/preconfigured in the resource pool, a starting point S and the corresponding number M of OFDM symbols for sending the SL PRS.

Determination method 1-3: The MAC layer of the UE firstly determines the sidelink grant. For example, the UE may obtain the sidelink grant by receiving the indication information from the base station, or may obtain the sidelink grant by autonomous resource selection. The sidelink grant is used at least for sending the PSSCH. Subsequently, the MAC layer of the UE may send (indicate) the determined sidelink grant to the physical layer of the UE, and indicate, to the physical layer, the minimum number (for example, which is represented as the first number of symbols) of OFDM symbols for sending the SL PRS, so that the physical layer of the UE may determine the starting point S and the corresponding number M of OFDM symbols for sending the SL PRS according to the configuration/pre-configuration in the resource pool and the first number of symbols. For example, for the at least one of PSSCH occasion or SL PRS occasion in which the sidelink grant exists, the physical layer of the UE may determine, from one or more starting points S and corresponding numbers M of OFDM symbols configured/preconfigured in the resource pool, a starting point S and the corresponding number M of OFDM symbols for sending the SL PRS. The determined number of OFDM symbols is not less than the first number of symbols indicated by the MAC layer.

It should be noted that, in some scenarios, the first number of symbols may be determined by other higher layers of the UE. For example, the first number of symbols may be determined by the SLPP layer of the UE and indicated to the physical layer of the UE.

Determination method 1-4: Other higher layers of the UE (such as the SLPP layer) determine, from one or more starting points S and the corresponding number M of OFDM symbols configured/preconfigured in the resource pool, the starting point S and the corresponding number M of OFDM symbols for sending the SL PRS, and indicate the starting point S and the corresponding number of OFDM symbols M to the physical layer.

In some embodiments, after the UE determines the starting point S and the corresponding number M of consecutive OFDM symbols for sending the SL PRS (i.e., after determining the OFDM symbols for sending the SL PRS), the UE may map the SL PRS to the determined OFDM symbols for sending the SL PRS.

In the first solution, the UE may map, for example, the PSSCH (complex-valued modulation symbols of the PSSCH) to the REs of the virtual resource blocks in one of the following mapping methods.

Mapping method 1-1: The UE may map, starting from the first OFDM symbol on which the PSSCH DMRS is located in the slot, the complex-valued modulation symbol(s) of the second-stage SCI in the PSSCH to one or more consecutive OFDM symbols, and then map other complex-valued modulation symbols of the PSSCH (that is, complex-valued modulation symbols except the complex-valued modulation symbols of the second-stage SCI).

For example, the UE may firstly map, starting from the first OFDM symbol on which the PSSCH DMRS exists in the slot, the complex-valued modulation symbols of the second-stage SCI to the REs of the virtual resource blocks allocated by the sidelink grant in an order of frequency domain followed by time domain and in an ascending index order. It is satisfied that the mapped REs are not occupied by the PSSCH DMRS, the PSCCH, the PSCCH DMRS, or the PT-RS.

In some embodiments, the UE may, for example, use the following method A and/or method B to cause that the second-stage SCI may ultimately be mapped to the OFDM symbol for which the SL PRS is not configured, or cause that the resource to which the second-stage SCI is mapped does not overlap (no resource collision occurs) with the OFDM symbol determined by the UE for sending the SL PRS.

Method A: It is ensured by rate matching of the second-stage SCI that the complex-valued modulation symbols of the second-stage SCI cannot ultimately occupy the OFDM symbols determined by the UE for sending the SL PRS. For example, in the process of rate matching of the second-stage SCI, the code rate offset ($\beta_{offset}^{SCI2}$) of the second-stage SCI selected by the UE may ensure that the complex-valued modulation symbols of the second-stage SCI cannot ultimately occupy the OFDM symbols determined by the UE for sending the SL PRS.

Method B: In the process of resource mapping according to the mapping method 1-1, there may be a case where X complex-valued modulation symbols of the second-stage SCI are mapped to OFDM symbols selected by the UE for sending the SL PRS. For this case, the UE may drop the X complex-valued modulation symbols of the second-stage SCI, thereby avoiding the influence on the SL PRS and simplifying the rate matching of the second-stage SCI.

The collision between resources for the second-stage SCI and the SL PRS can be effectively reduced by the above method A and/or method B.

After completing the mapping of the complex-valued modulation symbols of the second-stage SCI, the UE may sequentially map, starting from the first OFDM symbol in the slot, the other complex-valued modulation symbols of the PSSCH to the REs of the virtual resource blocks allocated by the sidelink grant in the ascending index order. It is satisfied that the mapped OFDM symbols are not selected by the UE for sending the SL PRS, and the REs are not occupied by the second-stage SCI, the PSSCH DMRS, the PSCCH, the PSCCH DMRS, or the PT-RS.

Further, the UE may map the virtual resource blocks to the physical resource blocks in a non-interleaved mapping manner. That is, the virtual resource block n is mapped to the physical resource block n, and n represents the index of the virtual resource block or the index of the physical resource block.

Taking FIG. 12 as an example, in the mapping method 1-1, the UE may map, starting from the first OFDM symbol (OFDM symbol # 4) on which the PSSCH DMRS is located in the slot, complex-valued modulation symbol(s) of the second stage SCI in the PSSCH to one or more consecutive OFDM symbols including OFDM symbol # 4, such as to OFDM symbol # 4 and OFDM symbol # 5. Subsequently, the UE may map, starting from the first OFDM symbol (OFDM symbol # 1) in the slot, other complex-valued modulation symbols of the PSSCH (i.e., portions, in the PSSCH, not including the second-stage SCI) to the remaining resources.

Mapping method 1-2: The UE may preferentially map, starting from the first OFDM symbol on which the PSSCH DMRS is located in the slot, the complex-valued modulation symbol(s) of the second-stage SCI in the PSSCH to the OFDM symbol(s) on which at least one of the PSSCH DMRS or the PSCCH exists, and then map other complex-valued modulation symbols of the PSSCH.

As an implementation manner, the UE may firstly map, starting from the first OFDM symbol on which the PSSCH DMRS exists in the slot, the complex-valued modulation symbols of the second-stage SCI to the REs of the virtual resource blocks allocated by the sidelink grant in an order of frequency domain followed by time domain and in an ascending index order. It is satisfied that the mapped REs are not occupied by the PSSCH DMRS, the PSCCH, the PSCCH DMRS, or the PT-RS.

If the complex-valued modulation symbols of the second-stage SCI remain after mapping in the above manner, the remaining complex-valued modulation symbols of the second-stage SCI may be sequentially mapped, starting from the first OFDM symbol on which the PSCCH exists in the slot, to the REs of the virtual resource blocks allocated by the sidelink grant in an order of frequency domain followed by time domain and in an ascending index order. It is satisfied that the PSCCH exists on the mapped OFDM symbol, and the mapped RE is not occupied by the mapped second-stage SCI, the PSSCH DMRS, the PSCCH DMRS, the PSCCH DMRS, or the PT-RS.

If the complex-valued modulation symbols of the second-stage SCI still remain after mapping in the above manner, the UE may sequentially map, from the first OFDM symbol, the remaining complex-valued modulation symbols of the second-stage SCI to the REs of the virtual resource blocks allocated by the sidelink grant in an order of frequency domain followed by time domain and in an ascending index order. It is satisfied that the mapped RE is not occupied by the mapped second-stage SCI, the PSSCH DMRS, the PSCCH, the PSCCH DMRS, or the PT-RS.

In some embodiments, the UE may, for example, use the following method A and/or method B to cause that the second-stage SCI may ultimately be mapped to the OFDM symbol for which the SL PRS is not configured, or cause that the resource to which the second-stage SCI is mapped does not overlap (no resource collision occurs) with the OFDM symbol determined by the UE for sending the SL PRS.

Method A: It is ensured by rate matching of the second-stage SCI that the complex-valued modulation symbols of the second-stage SCI cannot ultimately occupy the OFDM symbols determined by the UE for sending the SL PRS. For example, in the process of rate matching of the second-stage SCI, the code rate offset ( $\beta_{offset}^{SCI2}$ ) of the second-stage SCI selected by the UE may ensure that the complex-valued modulation symbols of the second-stage SCI cannot ultimately occupy the OFDM symbols determined by the UE for sending the SL PRS.

Method B: In the process of resource mapping according to the mapping method 1-2, there may be a case where X complex-valued modulation symbols of the second-stage SCI are mapped to OFDM symbols selected by the UE for sending the SL PRS. For this case, the UE may drop the X complex-valued modulation symbols of the second-stage SCI, thereby avoiding the influence on the SL PRS and simplifying the rate matching of the second-stage SCI.

The collision between resources for the second-stage SCI and the SL PRS can be effectively reduced by the above method A and/or method B.

After completing the mapping of the complex-valued modulation symbols of the second-stage SCI, the UE may sequentially map, starting from the first OFDM symbol in the slot, the other complex-valued modulation symbols of the PSSCH to the REs of the virtual resource blocks allocated by the sidelink grant in the ascending index order. It is satisfied that the mapped OFDM symbol is not selected by the UE for sending the SL PRS, and the RE is not occupied by the second-stage SCI, the PSSCH DMRS, the PSCCH, the PSCCH DMRS, or the PT-RS.

Further, the UE may map the virtual resource blocks to the physical resource blocks in a non-interleaved mapping manner. That is, the virtual resource block n is mapped to the physical resource block n, and n represents the index of the virtual resource block or the index of the physical resource block.

Taking FIG. 13 as an example, in the mapping method 1-2, the UE may map, starting from the first OFDM symbol (OFDM symbol # 4) on which the PSSCH DMRS is located in the slot, complex-valued modulation symbols of the second-stage SCI in the PSSCH to OFDM symbols (OFDM symbol # 4 and OFDM symbol # 10) on which the PSSCH DMRS exists. If the complex-valued modulation symbols of the second-stage SCI remain after mapping in the above manner, the remaining complex-valued modulation symbols of the second-stage SCI may be mapped to OFDM symbols (OFDM symbols # 1, 2, 3) on which the PSCCH exists. If complex-valued modulation symbols of the second-stage SCI still remain after mapping in the above manner, the remaining complex-valued modulation symbols of the second-stage SCI may be mapped, starting from the first OFDM, to unoccupied resources. The UE may then map other complex-valued modulation symbols of the PSSCH to the remaining resources.

For the mapping method 1-1, since the resource mapping method of the second-stage SCI is the same as the resource mapping method of the second-stage SCI before the 3GPP version Rel-18, in the first-stage SCI sent together with the second-stage SCI (that is, the first-stage SCI and the second-stage SCI are sent in the same slot), the format of the second-stage SCI may be indicated as a format of the second-stage SCI existing before the 3GPP version Rel-18, and then one or more specific bits in the format 2-D of the sent second-stage SCI may be set to 1 to indicate the format of the sent second-stage SCI to the receiving UE.

As an example, the UE may set the "2nd-stage SCI format" field in the first-stage SCI sent together with the second-stage SCI to "10" (which indicates that the format of the second-stage SCI is SCI format 2-C). In this case, the total number of bits for the format 2-D of the sent second-stage SCI is the same as that for the SCI format 2-C. Then, certain specific field positions, number of bits, and bit field values of SCI format 2-D may be determined as follows.

The first bit field "HARQ process number" includes 4 bits, and the value of this bit field is set in the same manner as SCI format 2-C.

The second bit field "New data indicator" includes 1 bit, and the value of this bit field is set in the same manner as SCI format 2-C.

The third bit field "Redundancy version" includes 2 bits, and the value of this bit field is set in the same manner as SCI format 2-C.

The fourth bit field "Source ID" includes 8 bits, and the value of this bit field is set in the same manner as SCI format 2-C.

The fifth bit field "Destination ID" includes 16 bits, and the value of this bit field is set in the same manner as SCI format 2-C.

The sixth bit field "HARQ feedback enabled/disabled indicator" includes 1 bit, and the value of this bit field is set in the same manner as SCI format 2-C.

The seventh bit field "CSI request" includes 1 bit, and the value of this bit field is set in the same manner as SCI format 2-C.

The eighth bit field "Providing/Requesting indicator" includes 1 bit, and the value of this bit field is set to "1".

The last bit field "Padding bits" includes: a specific bit set to "1" and the remaining bits set to "0".

In the present embodiment, the UE may set the "2nd-stage SCI format" field in the first-stage SCI sent together with the second-stage SCI to "10", set the "Providing/Requesting indicator" field in the sent second-stage SCI to "1", and set a specific bit in the Padding bits to "1", so that the format (SCI format 2-D) of the second-stage SCI can be jointly indicated by the first-stage SCI and the second-stage SCI.

In the mapping method 1-2, since the resource mapping method of the second-stage SCI is different from the resource mapping method of the second-stage SCI before the 3GPP release Rel-18, it is necessary to explicitly indicate the format of the sent second-stage SCI by a specific field in the first-stage SCI sent together with the second-stage SCI. For example, the "2nd-stage SCI format" field in the first-stage SCI sent together with the second-stage SCI may be set to "11" (which indicates that the format of the second-stage SCI is SCI format 2-D), or a specific bit in the Reserved field in the first-stage SCI sent together with the second-stage SCI may be set to "1" to indicate that the format of the sent second-stage SCI is SCI format 2-D.

It should be noted that the indication method of the second-stage SCI format in the mapping method 1-2 may be applied to the mapping method 1-1.

According to the method of the present embodiment, the second-stage SCI in the PSSCH may be mapped to OFDM symbol(s) for which the SL PRS is not configured, and thus the collision between resources for the second-stage SCI and the SL PRS may be effectively reduced. Further, in the mapping method 1-2, since the complex-valued modulation symbols of the second-stage SCI can be preferentially mapped to the OFDM symbols on which the PSSCH DMRS exists, the decoding performance of the second-stage SCI and the measurement accuracy related to positioning can be improved.

Second solution

In the second solution, the starting point S of OFDM symbols for sending the SL PRS in the resource pool and the corresponding number M of consecutive OFDM symbols may be configured or preconfigured. In some embodiments, the SL PRS cannot be configured on OFDM symbols available for the second-stage SCI, and/or the SL PRS may be punctured by the second-stage SCI in the PSSCH, or the second-stage SCI may be truncated. The portion, in the PSSCH, not including the second-stage SCI, may be mapped to the remaining resources.

In some embodiments, the starting point of the OFDM symbols available for sending the SL PRS in a slot in the resource pool is configured or preconfigured. One or more starting points S of OFDM symbols available for sending the SL PRS in a slot may be configured or preconfigured. For each starting point S, the corresponding number M of consecutive OFDM symbols for sending the SL PRS is configured or preconfigured. In some embodiments, any one configured or preconfigured starting point S and the corresponding M OFDM symbols cannot include the OFDM symbol available for sending the PSCCH in the current slot.

In some embodiments, at least one pattern, of the PSSCH DMRS, configured/preconfigured in the resource pool, cannot include N OFDM symbols, not including the PSCCH, after the first PSSCH DMRS. In other words, in the at least one pattern of the PSSCH DMRS configured/preconfigured in the resource pool, N OFDM symbols that do not include the PSCCH exist between the OFDM symbols on which the first PSSCH DMRS and the second PSSCH DMRS are located. N is a specific value greater than or equal to 0, which value may be defined by a standard, or configured by the network or preconfigured. For example, N may be configured by the network or preconfigured to 1.

In some embodiments, N OFDM symbols after the first PSSCH DMRS that do not includ the PSCCH, do not overlap with OFDM symbols for sending the SL PRS.

In some embodiments, for example, N OFDM symbols, not including the PSCCH, after the first PSSCH DMRS may be used for mapping of the second-stage SCI, so that the relatively sufficient position can be reserved for the second-stage SCI, which is beneficial to reduce the influence on rate matching of the second-stage SCI.

In the second solution, the method for the UE determining (selecting), from the starting points S of the OFDM symbols for sending the SL PRS and the corresponding numbers M of consecutive OFDM symbols configured/preconfigured in the resource pool, the starting point of the OFDM symbols for sending the SL PRS and the corresponding number of consecutive OFDM symbols may be referred to that in the first solution, which will not be repeated here.

In the second solution, the UE may map, for example, the PSSCH (complex-valued modulation symbols of the PSSCH) to the REs of the virtual resource blocks in one of the following mapping methods.

Mapping method 2-1: The UE may map, starting from the first OFDM symbol on which the PSSCH DMRS is located in the slot, the complex-valued modulation symbol(s) of the second-stage SCI in the PSSCH to one or more consecutive OFDM symbols, and then map other complex-valued modulation symbols of the PSSCH (that is, complex-valued modulation symbols except the complex-valued modulation symbols of the second-stage SCI).

For example, the UE may firstly map, starting from the first OFDM symbol on which the PSSCH DMRS exists in the slot, the complex-valued modulation symbols of the second-stage SCI to the REs of the virtual resource blocks allocated by the sidelink grant in an order of frequency domain followed by time domain and in an ascending index order. It is satisfied that the mapped REs are not occupied by the PSSCH DMRS, the PSCCH, the PSCCH DMRS, or the PT-RS.

In some embodiments, the UE should ensure that the complex-valued modulation symbols of the second-stage SCI cannot ultimately occupy the OFDM symbols determined by the UE for sending the SL PRS. For example, the UE may ensure that the complex-valued modulation symbols of the second-stage SCI cannot ultimately occupy the OFDM symbols determined by the UE for sending the SL PRS by selecting appropriate OFDM symbols for sending the SL PRS and adjusting the second-stage SCI code rate offset ( $\beta_{offset}^{SCI2}$ ) in the rate matching of the second-stage SCI. Thus, the collision between resources for the second-stage SCI and the SL PRS can be effectively reduced.

After completing the mapping of the complex-valued modulation symbols of the second-stage SCI, the UE may sequentially map, starting from the first OFMD symbol in the slot, the other complex-valued modulation symbols of the PSSCH to the REs of the virtual resource blocks allocated by the sidelink grant in the ascending index order. It is satisfied that the mapped OFDM symbols are not selected by the UE for sending the SL PRS, and the REs are not occupied by the second-stage SCI, the PSSCH DMRS, the PSCCH, the PSCCH DMRS, or the PT-RS.

Further, the UE may map the virtual resource blocks to the physical resource blocks in a non-interleaved mapping manner. That is, the virtual resource block n is mapped to the physical resource block n, and n represents the index of the virtual resource block or the index of the physical resource block.

Mapping method 2-2: The UE may map the SL PRS to the selected OFDM symbols for sending the SL PRS. Then, the UE may map, starting from the first OFDM symbol on which the PSSCH DMRS is located, the complex-valued modulation symbols of the second-stage SCI to one or more consecutive OFDM symbols. In this process, if the complex-valued modulation symbols of the second-stage SCI are mapped to the OFDM symbols for the SL PRS, the SL PRS may be punctured by the second-stage SCI, or the second-stage SCI may be truncated, and then other complex-valued modulation symbols of the PSSCH are mapped.

For example, the UE may firstly map the SL PRS to OFDM symbols selected by the UE for sending the SL PRS. After the mapping of the SL PRS is completed, the UE may sequentially map, starting from the first OFDM symbol on which the PSSCH DMRS exists in the slot, the complex-valued modulation symbols of the second-stage SCI to the REs of the virtual resource blocks allocated by the sidelink grant in an order of frequency domain followed by time domain and in an ascending index order. It is satisfied that the mapped REs are not occupied by the PSSCH DMRS, the PSCCH, the PSCCH DMRS, or the PT-RS.

If the second-stage SCI is mapped to the OFDM symbols for sending the SL PRS selected by the UE in the process of mapping the complex-valued modulation symbols of the second-stage SCI, or in a case that the OFDM symbols for the second-stage SCI are about to overlap with the OFDM symbols for sending the SL PRS, the following method 2-2-1 or method 2-2-2 may be used for processing.

Method 2-2-1: In order to simplify the mapping method of the second-stage SCI, the UE may continue to map the remaining complex-valued modulation symbols of the second-stage SCI in the above manner, and on the OFDM symbols for sending the SL PRS, the UE may use the complex-valued modulation symbols of the second-stage SCI to cover the mapped SL PRS. In other words, when the OFDM symbols for the second-stage SCI overlap with the OFDM symbols for sending the SL PRS, the UE may use the complex-valued modulation symbols of the second-stage SCI to cover the mapped SL PRS, as illustrated in OFDM symbol # 6 in FIG. 14.

After completing the mapping of the complex-valued modulation symbols of the second-stage SCI, the UE may sequentially map, starting from the first OFMD symbol in the slot, the other complex-valued modulation symbols of the PSSCH to the REs of the virtual resource blocks allocated by the sidelink grant in an ascending index order. It is satisfied that the REs are not occupied by the second-stage SCI, the PSSCH DMRS, the PSCCH, the PSCCH DMRS, or the PT-RS.

In some embodiments, in order to avoid the influence on the SL PRS, other complex-valued modulation symbols of the PSSCH cannot be mapped to OFDM symbols on which only the SL PRS exists, but other complex-valued modulation symbols of the PSSCH may be mapped to OFDM symbols to which complex-valued modulation symbols of the second-stage SCI and the SL PRS have been mapped. In this case, the other complex-valued modulation symbols of the PSSCH may cover the mapped SL PRS in the OFDM symbol, as illustrated in OFDM symbol # 6 in FIG. 14.

Method 2-2-2: In order to simplify the mapping method of the second-stage SCI and reduce the influence on the SL PRS, the UE should stop mapping of the complex-valued modulation symbols of the second-stage SCI. In other words, when the OFDM symbols for the second-stage SCI are about to overlap with the OFDM symbols for sending the SL PRS, the UE should truncate the second-stage SCI to avoid collision between resources for the second-stage SCI and the SL PRS.

After completing the mapping of the complex-valued modulation symbols of the second-stage SCI, the UE may sequentially map, starting from the first OFMD symbol in the slot, other complex-valued modulation symbols of the PSSCH to the REs of the virtual resource blocks allocated by the sidelink grant in an ascending index order. It is satisfied that the mapped OFDM symbols are not selected by the UE for sending the SL PRS, and the REs are not occupied by the second-stage SCI, the PSSCH DMRS, the PSCCH, the PSCCH DMRS, or the PT-RS.

According to the above method 2-2-1/method 2-2, the problem of how to handle when the OFDM symbols for the second-stage SCI overlap with the OFDM symbols for sending the SL PRS can be solved.

Further, the UE may map the virtual resource blocks to the physical resource blocks in a non-interleaved mapping manner. That is, the virtual resource block n is mapped to the physical resource block n, and n represents the index of the virtual resource block or the index of the physical resource block.

For the mapping method 2-1 and the mapping method 2-2-1, since the resource mapping method of the second-stage SCI is the same as the resource mapping method of the second-stage SCI before the 3GPP version Rel-18, in the first-stage SCI sent together with the second-stage SCI, the format of the second-stage SCI may be indicated as a format of the second-stage SCI existing before the 3GPP version Rel-18, and then one or more specific bits in the format 2-D of the sent second-stage SCI may be set to 1 to indicate the format of the sent second-stage SCI to the receiving UE. This part may refer to the related description of mapping method 1-1 in the first solution, which will not be repeatedly described here.

For the method 2-2-2, since the resource mapping method of the second-stage SCI is different from the resource mapping method of the second-stage SCI before the 3GPP release Rel-18, it is necessary to explicitly indicate the format of the sent second-stage SCI by a specific field in the first-stage SCI sent together with the second-stage SCI. This part may refer to the related description of mapping method 1-2 in the first solution, which will not be repeatedly described here.

According to the method of the present embodiment, the UE can reduce the influence on the rate matching and resource mapping of the second-stage SCI as much as possible.

Third solution

In the third solution, the UE may firstly map the second-stage SCI in the PSSCH, then determine (select) OFDM symbols for sending the SL PRS, map the SL PRS to the selected OFDM symbols, and finally map a portion, in the PSSCH, not including the second-stage SCI (i.e., complex-valued modulation symbols except the complex-valued modulation symbols of the second-stage SCI).

For example, the UE may map the PSSCH (complex-valued modulation symbols of the PSSCH) and the SL PRS to the REs of the virtual resource blocks, for example, in the following mapping method.

The UE may sequentially firstly map, starting from the first OFDM symbol on which the PSSCH DMRS exists in the slot, the complex-valued modulation symbols of the second-stage SCI to the REs of the virtual resource blocks allocated by the sidelink grant in an order of frequency domain followed by time domain and in an ascending index order. It is satisfied that the mapped REs are not occupied by the PSSCH DMRS, the PSCCH, the PSCCH DMRS or the PT-RS.

After completing the mapping of the complex-valued modulation symbols of the second-stage SCI, the UE may determine (select) the OFDM symbols for sending the SL PRS, and map the SL PRS to the selected M consecutive OFDM symbols for sending the SL PRS.

In the third solution, the UE may determine (select) OFDM symbols for sending the SL PRS, for example, in one of the following determination methods.

Determination method 3-1: The values of S and M are determined by the MAC layer of the UE.

The MAC layer of the UE firstly determines the sidelink grant. For example, the UE may obtain the sidelink grant by receiving the indication information from the base station, or may obtain the sidelink grant by autonomous resource selection. The sidelink grant is used at least for sending the PSSCH.

For there is a sidelink grant occurring in the PSSCH occasion and/or SL PRS occasion, the MAC layer of the UE may determine, in the PSSCH occasion and/or SL PRS occasion where the sidelink grant exists, the starting point S of OFDM symbols for sending the SL PRS and the corresponding number M of OFDM symbols. The OFDM symbols for sending the SL PRS determined by the MAC layer of the UE need to satisfy that the PSSCH DMRS, the second-stage SCI, the PSCCH, or the PSCCH DMRS does not exist on the determined M consecutive OFDM symbols. In some embodiments, the MAC layer of the UE may carry the determined starting point S and the corresponding M in the sidelink grant and indicate the sidelink grant to the physical layer of the UE.

Determination method 3-2: The values of S and M are determined by the physical layer of the UE.

For example, the UE may obtain a sidelink grant by receiving the indication information from the base station, or may obtain the sidelink grant by autonomous resource selection. The sidelink grant is used at least for sending the PSSCH. Subsequently, the MAC layer of the UE may send (indicate) the determined sidelink grant to the physical layer of the UE. Therefore, the physical layer of the UE may determine the starting point S of the OFDM symbols for sending the SL PRS and the corresponding number M of OFDM symbols based on the sidelink grant, and the OFDM symbols for sending the SL PRS determined by the physical layer of the UE must satisfy that the PSSCH DMRS, the second-stage SCI, the PSCCH, or the PSCCH DMRS does not exist on the determined M consecutive OFDM symbols.

Determination method 3-3: The physical layer of UE determines values of S and M based on the first number of symbols.

The first number of symbols is the minimum number of OFDM symbols for sending the SL PRS determined by a higher layer of the UE (for example, a MAC layer of the UE or a SLPP layer of the UE).

In one possible method, the first number of symbols is determined by the MAC layer of the UE. In this case, the MAC layer of the UE may send (indicate) the determined sidelink grant to the physical layer of the UE and indicate the first number of symbols to the physical layer of the UE. Thus, the physical layer of the UE may determine the starting point S of the OFDM symbols for sending the SL PRS and the corresponding number M of OFDM symbols based on the sidelink grant and the first number of symbols. The OFDM symbols for sending the SL PRS determined by the physical layer of the UE must satisfy that the determined value of M is not less than the first number of symbols indicated by the MAC layer, and the PSSCH DMRS, the second-stage SCI, the PSCCH, or the PSCCH DMRS does not exist on the determined M consecutive OFDM symbols.

In another possible method, the first number of symbols is determined by the SLPP layer. In this case, the SLPP layer may indicate the determined first number of symbols to the physical layer of the UE. Thus, the physical layer of the UE may determine a starting point S of OFDM symbols for sending the SL PRS and a corresponding number M of OFDM symbols based on the first number of symbols. For example, the physical layer of the UE may determine a starting point S of OFDM symbols for sending the SL PRS and a corresponding number M of OFDM symbols based on the sidelink grant and the first number of symbols after obtaining the sidelink grant from the MAC layer of the UE. The OFDM symbols for sending the SL PRS determined by the physical layer of the UE must satisfy that the determined value of M is not less than the first number of symbols indicated by the SLPP layer, and the PSSCH DMRS, the second-stage SCI, the PSCCH, or the PSCCH DMRS does not exist on the determined M consecutive OFDM symbols.

For example, before the MAC layer of the UE sends (indicates) the sidelink grant to the physical layer of the UE, the UE may obtain the sidelink grant by, for example, one of the following methods. 1) The sidelink grant is obtained by receiving the indication information from the base station. 2) The sidelink grant is obtained by autonomous resource selection. The sidelink grant is used at least for sending the PSSCH.

Determination method 3-4: OFDM symbols for sending the SL PRS are determined by other higher layers of the UE (for example, SLPP layer of the UE). The OFDM symbols for sending the SL PRS determined by other higher layers (such as SLPP layers) of the UE need to satisfy that the PSSCH DMRS, the second-stage SCI, the PSCCH, or the PSCCH DMRS does not exist on the determined M consecutive OFDM symbols. In some embodiments, the SLPP layer of the UE may further indicate the determined OFDM symbols for sending the SL PRS to the physical layer.

After the mapping of the SL PRS is completed, the UE may sequentially map, starting from the first OFMD symbol in the slot, other complex-valued modulation symbols of the PSSCH to the REs of the virtual resource blocks allocated by the sidelink grant in an ascending index order. It is satisfied that the mapped OFDM symbols are not selected by the UE for sending the SL PRS, and the REs are not occupied by the second-stage SCI, the PSSCH DMRS, the PSCCH, the PSCCH DMRS, or the PT-RS.

Further, the UE may map the virtual resource blocks to the physical resource blocks in a non-interleaved mapping manner. That is, the virtual resource block n is mapped to the physical resource block n, and n represents the index of the virtual resource block or the index of the physical resource block.

According to the method of the present embodiment, since the OFDM symbols for sending the SL PRS is determined after the second-stage SCI is mapped, the complexity of the resource mapping for the second-stage SCI can be reduced, and the flexibility of resource selection for the SL PRS can be increased. Further, since the UE avoids the mapped second-stage SCI when determining the OFDM symbols for sending the SL PRS, the collision between the resources for the second-stage SCI and the SL PRS can be avoided.

Fourth solution

In the fourth solution, the OFDM symbols for sending the SL PRS do not depend on the OFDM symbols for sending the second stage SCI. For example, the UE may first determine OFDM symbols for sending the SL PRS, map the SL PRS to the determined OFDM symbols for sending the SL PRS, and then map, starting from the first PSSCH DMRS, the second-stage SCI and PSSCH.

In the fourth solution, the UE may determine OFDM symbols for sending the SL PRS, for example, in one of the following methods.

Determination method 4-1: The method is same as determination method 1-1.

Determination method 4-2: The MAC layer of the UE may send (indicate) the determined sidelink grant to the physical layer of the UE, so that the physical layer of the UE may select OFDM symbols for sending the SL PRS from the time-frequency resources indicated by the sidelink grant. In some embodiments, the OFDM symbols determined by the physical layer of the UE for sending the SL PRS need to satisfy that the PSSCH DMRS, the PSCCH, or the PSCCH DMRS does not exist on the determined M consecutive OFDM symbols.

Determination method 4-3: The MAC layer of the UE may send (indicate) the determined sidelink grant to the physical layer of the UE, and indicate the number M of consecutive OFDM symbols for sending the SL PRS to the physical layer of the UE. Further, the physical layer of the UE may determine the positions of M consecutive OFDM symbols, or determine the starting point S for sending the SL PRS, based on the sidelink grant sent by the MAC layer of the UE and the value of M.

For example, before the MAC layer of the UE sends (indicates) the sidelink grant to the physical layer of the UE, the UE may obtain the sidelink grant by, for example, one of the following methods. 1) The sidelink grant is obtained by receiving the indication information from the base station. 2) The sidelink grant is obtained by autonomous resource selection. The sidelink grant is used at least for sending the PSSCH.

Determination mode 4-4: The SLPP layer of the UE may indicate the number M of consecutive OFDM symbols for sending the SL PRS to the physical layer of the UE. Further, the physical layer of the UE may determine the positions of M consecutive OFDM symbols, or determine the starting point S for sending the SL PRS, based on the value of M indicated by the SLPP layer of the UE.

In some embodiments, the value of M determined by the MAC layer of the UE should be less than or equal to the number of consecutive OFDM symbols, in the current slot, not including the PSSCH DMRS and the PSCCH. In some embodiments, the OFDM symbols determined by the physical layer of the UE for sending the SL PRS need to satisfy that the PSSCH DMRS, the PSCCH, or the PSCCH DMRS does not exist on the determined M consecutive OFDM symbols.

In the fourth solution, the UE may map the PSSCH (complex-valued modulation symbols of the PSSCH) and the SL PRS to the REs of the virtual resource blocks, for example, in the following mapping method.

For example, the UE may first map the SL PRS to M consecutive OFDM symbols selected for sending the SL PRS. Then, the UE may sequentially map, starting from the first OFDM symbol on which the PSSCH DMRS exists in the slot, the complex-valued modulation symbols of the second-stage SCI to the REs of the virtual resource blocks allocated by the sidelink grant in an order of frequency domain followed by time domain and in an ascending index order. As one implementation, the complex-valued modulation symbols of the second-stage SCI cannot be mapped to the OFDM symbols on which the SL PRS exists, and it is satisfied that the mapped REs are not occupied by the PSSCH DMRS, the PSCCH, the PSCCH DMRS, or the PT-RS.

After completing the mapping of the complex-valued modulation symbols of the second-stage SCI, the UE may sequentially map, starting from the first OFMD symbol, in the slot the other complex-valued modulation symbols of the PSSCH to the REs of the virtual resource blocks allocated by the sidelink grant in an ascending index order. It is satisfied that the mapped OFDM symbols are not selected by the UE for sending the SL PRS, and the REs are not occupied by the second-stage SCI, the PSSCH DMRS, the PSCCH, the PSCCH DMRS, or the PT-RS.

Further, the UE may map the virtual resource blocks to the physical resource blocks in a non-interleaved mapping manner. That is, the virtual resource block n is mapped to the physical resource block n, and n represents the index of the virtual resource block or the index of the physical resource block.

Fifth solution

In the fifth solution, the UE may firstly determine OFDM symbols for sending the SL PRS, and map the SL PRS to the determined OFDM symbols. Subsequently, the second-stage SCI in the PSSCH and the portion, in the PSSCH, not including the second-stage SCI may be mapped starting from the first PSSCH DMRS. As one implementation, the OFDM symbols where the SL PRS is located may be punctured by the second-stage SCI, or the redundant second-stage SCI may be truncated (dropped), and the PSSCH may occupy the remaining resources on the OFDM symbols(even if the OFDM symbols are used for the SL PRS) where the second-stage SCI exists.

For example, the UE may determine OFDM symbols for sending the SL PRS according to the determination method 4-1, the determination method 4-2, the determination method 4-3, or the determination method 4-4.

In the fifth solution, the UE may map the PSSCH (complex-valued modulation symbols of the PSSCH) and the SL PRS to the REs of the virtual resource blocks, for example, in the following mapping method.

The UE firstly maps the SL PRS to M consecutive OFDM symbols selected for sending the SL PRS. Subsequently, the UE may map the complex-valued modulation symbols of the second-stage SCI in the PSSCH and the portion, in the PSSCH, not including the second-stage SCI (that is, the complex-valued modulation symbols in the PSSCH except the complex-valued modulation symbols of the second-stage SCI) according to the mapping method 2-2.

Further, the UE may map the virtual resource blocks to the physical resource blocks in a non-interleaved mapping manner. That is, the virtual resource block n is mapped to the physical resource block n, and n represents the index of the virtual resource block or the index of the physical resource block.

The preferred embodiments of the present disclosure have been described in detail above with reference to the accompanying drawings, but the present disclosure is not limited to the specific details in the above-described embodiments. Within the scope of the technical concept of the present disclosure, various simple modifications may be made to the technical solutions of the present disclosure, and these simple modifications all fall within the scope of protection of the present disclosure. For example, various specific technical features described in the above-described detailed embodiments may be combined in any suitable manner without contradiction, and various possible combinations will not be described separately in the present disclosure in order to avoid unnecessary repetition. For example, various embodiments of the present disclosure may be combined arbitrarily, and as long as they do not violate the idea of the present disclosure, they should also be regarded as the disclosure of the present disclosure. For another example, on the premise that there is no conflict, various embodiments described in the present disclosure and/or the technical features in various embodiments may be arbitrarily combined with the prior art, and the technical solutions obtained after the combination should also fall within the scope of protection of the present disclosure.

It should also be understood that in various method embodiments of the present disclosure, the size of the sequence number of the above-described processes does not mean the sequence of execution, and the sequences of execution of various processes should be determined by their functions and internal logics, and should not constitute any limitation on the implementation processes of the embodiments of the present disclosure. In addition, in the embodiments of the present disclosure, the terms "downlink", "uplink", and "sidelink" are used to indicate the transmission direction of signals or data. The "downlink" is used to indicate that the transmission direction of signals or data is the first direction sent from the station to the UE of the cell, the "uplink" is used to indicate that the transmission direction of signals or data is the second direction sent from the UE of the cell to the station, and "sidelink" is used to indicate that the transmission direction of signals or data is the third direction sent from the UE 1 to the UE 2. For example, "downlink signal" indicates that the transmission direction of the signal is the first direction. In addition, in the embodiments of the present disclosure, the term "and/or" is used only describing one kind of association relationship between association objects, and indicates that there may be three kinds of relationships. Specifically, A and/or B may represent three cases that A exists alone, A and B exist simultaneously, and B exists alone. In addition, the character "/" in the present disclosure generally indicates that there is an "or" relationship between the association objects.

Based on the foregoing embodiments, embodiments of the present disclosure provide the corresponding apparatus for resource mapping.

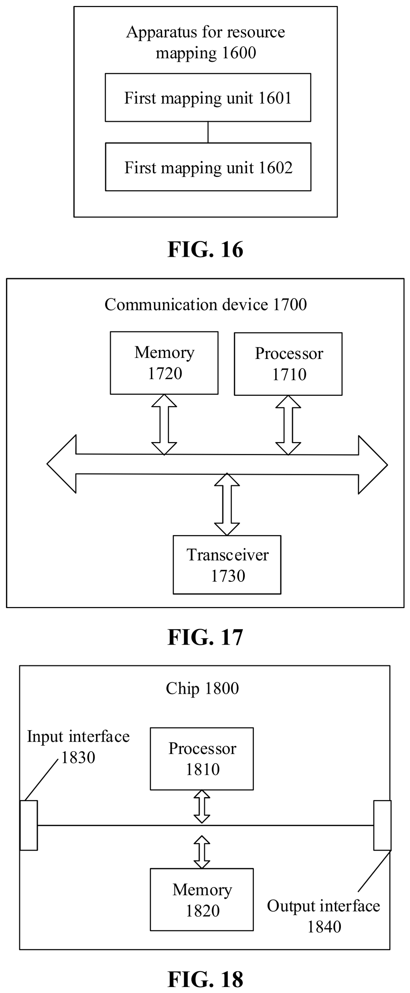

FIG. 16 is a schematic diagram of the structure and composition of an apparatus for resource mapping according to an embodiment of the present disclosure. The apparatus is applied to a terminal. As illustrated in FIG. 16, the apparatus for resource mapping 1600 includes the first mapping unit 1601 and the second mapping unit.

The first mapping unit is configured to map, starting from the first resource unit in a slot, second-stage SCI in a PSSCH to at least one second resource unit including the first resource unit. A Demodulation Reference Signal (DMRS) of the PSSCH (PSSCH DMRS) exists on a symbol where the first resource unit is located, and the at least one second resource unit does not overlap or partially overlaps with symbols for sending a Sidelink Positioning Reference Signal (SL PRS). The second mapping unit is configured to map a portion, in the PSSCH, not including the second-stage SCI to at least one third resource unit that does not include the second-stage SCI.

In some embodiments, the first mapping unit 1601 is specifically configured to map, starting from the first resource unit in the slot, the second-stage SCI in the PSSCH to the at least one second resource unit including the first resource unit in an order of frequency domain followed by time domain and in an ascending index order.

In some embodiments, the first mapping unit 1601 is specifically configured to preferentially map, starting from the first resource unit in the slot, the second-stage SCI in the PSSCH to at least one fourth resource unit including the first resource unit. The PSSCH DMRS and/or a Physical Sidelink Control Channel (PSCCH) exist(s) on a symbol where the fourth resource unit is located, and the at least one second resource unit includes the at least one fourth resource unit.

In some embodiments, the apparatus 1600 further includes an adjustment unit. The adjustment unit is configured to adjust a code rate offset of the second-stage SCI to cause the at least one second resource unit for mapping the second-stage SCI to not overlap with the symbols for sending the SL PRS.

In some embodiments, the apparatus 1600 further includes a dropping unit. The dropping unit is configured to, in a case that the at least one second resource unit does not overlap with the symbols for sending the SL PRS, if remaining second-stage SCI exists after mapping the second-stage SCI to the at least one second resource unit, drop the remaining second-stage SCI.

In some embodiments, in a case that the at least one second resource unit partially overlaps with the symbols for sending the SL PRS, a mapped SL PRS in an overlapped portion is covered by the second-stage SCI in the at least one second resource unit.

In some embodiments, in a symbol corresponding to the overlapped portion, a mapped SL PRS that is not covered by the second-stage SCI in the at least one second resource unit is allowed to be covered by the portion, in the PSSCH, not including the second-stage SCI.

In some embodiments, the apparatus 1600 further includes the third mapping unit. The third mapping unit is configured to map the SL PRS to the symbols for sending the SL PRS before mapping, starting from the first resource unit in the slot, the second-stage SCI in the PSSCH to the at least one second resource unit including the first resource unit.

In some embodiments, time domain positions of the symbols for sending the SL PRS are determined by a Media Access Control (MAC) layer or a physical layer of the terminal from candidate time domain positions in a resource pool, or are determined by the physical layer of the terminal from candidate time domain positions in the resource pool based on a first number of symbols. The candidate time domain positions are preconfigured or configured by a network, and the first number of symbols is a minimum number of symbols determined by the MAC layer for sending the SL PRS.

In some embodiments, symbols corresponding to the candidate time domain positions do not include a symbol that is available for sending the second-stage SCI.

In some embodiments, in a case that the time domain positions of the symbols for sending the SL PRS are determined by the MAC layer, the time domain positions of the symbols for sending the SL PRS determined by the MAC layer do not include a symbol that is available for sending the second-stage SCI.

In some embodiments, time domain positions of the symbols for sending the SL PRS are determined by a Media Access Control (MAC) layer or a physical layer of the terminal, or are determined by the physical layer of the terminal based on a first number of symbols. A Physical Sidelink Control Channel (PSCCH), the PSSCH DMRS, a DMRS of a PSCCH (PSCCH DMRS), or a mapped second-stage SCI does not exist on the symbols for sending the SL PRS, and the first number of symbols is a minimum number of symbols determined by the MAC layer for sending the SL PRS.

In some embodiments, the time domain positions of the symbols for sending the SL PRS are determined after mapping the second stage SCI to the at least one second resource unit.

In some embodiments, the time domain positions of the symbols for sending the SL PRS are determined based on the number of symbols for sending the SL PRS and a starting symbol position. In a case that the time domain positions of the symbols for sending the SL PRS are determined by the physical layer based on the first number of symbols, the number of symbols for sending the SL PRS determined by the physical layer is greater than or equal to the first number of symbols.

In some embodiments, time domain positions of the symbols for sending the SL PRS are determined by a physical layer of the terminal. Alternatively, the number of symbols for sending the SL PRS is determined by a Media Access Control (MAC) layer of the terminal, a starting symbol position of the symbols for sending the SL PRS is determined by a physical layer of the terminal based on the number, and the number is less than or equal to the number of consecutive symbols available for sending the SL PRS in the slot.

In some embodiments, a PSCCH, the PSSCH DMRS, or a DMRS of a PSCCH (PSCCH DMRS) does not exist on the symbols for sending the SL PRS.

In some embodiments, the time domain positions of the symbols for sending the SL PRS are determined based on the number of symbols for sending the SL PRS and a starting symbol position.

In some embodiments, a time domain position of the PSSCH DMRS in the slot are determined based on at least one PSSCH DMRS pattern, preconfigured or configured by a network, in the resource pool. In the at least one pattern, of the PSSCH DMRS, preconfigured or configured by a network, N symbols that do not include the Physical Sidelink Control Channel (PSCCH) exist between symbols on which the first PSSCH DMRS and the second PSSCH DMRS are located. N is an integer, greater than or equal to 0, preconfigured or configured by a network.

In some embodiments, the N symbols that do not include the PSCCH do not overlap with the symbols for sending the SL PRS.

In some embodiments, the at least one third resource unit does not overlap with the symbols for sending the SL PRS.

In some embodiments, the at least one second resource unit and the at least one third resource unit are not occupied by the PSSCH DMRS, a Physical Sidelink Control Channel (PSCCH), a DMRS of a PSCCH (PSCCH DMRS), or a Phase-Tracking Reference Signal (PT-RS) .

In some embodiments, the slot further includes the first-stage SCI, and the first-stage SCI and/or the second-stage SCI include(s) a bit field for indicating a format of the second-stage SCI.

In some embodiments, in the second-stage SCI, the bit field for indicating the format of the second-stage SCI includes a last bit field in the second-stage SCI.

Those skilled in the art should understand that the related description of the above-described resource mapping apparatus according to the embodiment of the present disclosure can be understood with reference to the related description of the resource mapping method according to the embodiment of the present disclosure.

FIG. 17 is a schematic structural diagram of a communication device 1700 according to an embodiment of the present disclosure. The communication device 1700 illustrated in FIG. 17 includes a processor 1710. The processor is configured to call and execute a computer program from a memory to implement the method in the embodiments of the present disclosure.

Alternatively, as illustrated in FIG. 17, the communication device 1700 may further include a memory 1720. The processor 1710 may call and execute a computer program in the memory 1720 to implement the method in the embodiments of the present disclosure.

The memory 1720 may be a separate device independent of the processor 1710 or may be integrated in the processor 1710.

Alternatively, as illustrated in FIG. 17, the communication device 1700 may further include a transceiver 1730. The processor 1710 may control the transceiver 1730 to communicate with other devices, specifically, may send information or data to other devices, or receive information or data sent by other devices.

Here, the transceiver 1730 may include a transmitter and a receiver. The transceiver 1730 may further include one or more antennas.

Specifically, the communication device 1700 may be a terminal according to the embodiment of the present disclosure, and the communication device 1700 may implement corresponding processes implemented by the terminal in various methods according to the embodiments of the present disclosure, which will not be repeatedly described here for the sake of simplicity.

FIG. 18 is a schematic structural diagram of a chip according to an embodiment of the present disclosure. The chip 1800 illustrated in FIG. 18 includes a processor 1810. The processor may call and execute a computer program in a memory to implement the method in the embodiments of the present disclosure.

Alternatively, as illustrated in FIG. 18, the chip 1800 may further include a memory 1820. The processor 1810 may call and execute a computer program in the memory 1820 to implement the method in the embodiments of the present disclosure.

The memory 1820 may be a separate device independent of the processor 1810 or may be integrated in the processor 1810.

Alternatively, the chip 1800 may further include an input interface 1830. The processor 1810 may control the input interface 1830 to communicate with other devices or chips, and specifically, may acquire information or data sent by other devices or chips.

Alternatively, the chip 1800 may further include an output interface 1840. The processor 1810 may control the output interface 1840 to communicate with other devices or chips, specifically, may output information or data to other devices or chips.

The chip may be applied to the terminal in the embodiments of the present disclosure, and the chip may implement the corresponding processes implemented by the terminal in various methods of the embodiments of the present disclosure, which will not be repeatedly described here for the sake of simplicity.

It should be understood that the chip mentioned in the embodiments of the present disclosure may also be referred to as a system level chip, a system chip, a chip system, or a system-on-chip.

It should be understood that the processor of the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable programmable memory, registers, etc. The storage medium is located in the memory, and the processor reads the information in the memory, and combines its hardware to complete the operations of the above method.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present disclosure may also be a SRAM, a DRAM, a SDRAM, a DDR SDRAM, an ESDRAM, a SLDRAM, a DR RAM, and the like. That is, the memory in the embodiments of the present disclosure is intended to include, but is not limited to, these and any other suitable type of memory.

Embodiments of the present disclosure further provide a computer readable storage medium for storing a computer program. The computer readable storage medium may be applied to the terminal in the embodiment of the present disclosure, and the computer program causes the computer to execute corresponding processes implemented by the terminal in various methods of the embodiments of the present disclosure, which will not be described herein for the sake of brevity.

Embodiments of the present disclosure further provide a computer program product including computer program instructions. The computer program product may be applied to the terminal in the embodiments of the present disclosure, and the computer program instruction causes the computer to execute the corresponding processes implemented by the terminal in various methods of the embodiments of the present disclosure, which will not be described herein for the sake of brevity.

Embodiments of the present disclosure further provide a computer program. The computer program may be applied to the terminal in the embodiments of the present disclosure, and when the computer program is executed on the computer, the computer executes the corresponding processes implemented by the terminal in various methods of the embodiments of the present disclosure, which will not be described herein for the sake of brevity.

Those of ordinary skill in the art will appreciate that the elements and algorithmic steps of the various examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, apparatus, and units described above may refer to the corresponding processes in the aforementioned method embodiments, which will not be described herein for the sake of brevity.

In several embodiments provided herein, it should be understood that the disclosed systems, apparatus, and methods may be implemented in other ways. For example, the apparatus embodiment described above is merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, apparatus or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solutions of the present embodiment.

In addition, various functional units in various embodiments of the present disclosure may be integrated in one processing unit, each unit may be physically present alone, or two or more units may be integrated in one unit.

The functions may be stored in a computer readable storage medium if implemented in the form of software functional units and sold or used as independent products. Based on this understanding, the technical solution of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the operations of the method described in various embodiments of the present disclosure. The storage medium includes a USB disk, a removable hard disk, a Read-Only Memory (ROM), a Random Access Memory (RAM), a magnetic disk, or an optical disk that can store a program code.

The above is merely specific embodiments of the present disclosure, but the scope of protection of the present disclosure is not limited thereto, and any person skilled in the art may easily think of changes or substitutions within the technical scope disclosed in the present disclosure, which should be covered within the scope of protection of the present disclosure. Therefore, the scope of protection of the present disclosure should be based on the scope of protection of the claims.

**Claims**

1. A method for resource mapping, applied to a terminal, comprising:

   mapping, starting from a first resource unit in a slot, second-stage Sidelink Control Information (SCI) in a Physical Sidelink Shared Channel (PSSCH) to at least one second resource unit comprising the first resource unit, wherein a Demodulation Reference Signal (DMRS) of the PSSCH (PSSCH DMRS) exists on a symbol where the first resource unit is located, and the at least one second resource unit does not overlap or partially overlaps with symbols for sending a Sidelink Positioning Reference Signal (SL PRS); and
   mapping a portion, in the PSSCH, not comprising the second-stage SCI to at least one third resource unit that does not comprise the second-stage SCI.

2. The method of claim 1, wherein mapping, starting from the first resource unit in the slot, the second-stage SCI in the PSSCH to the at least one second resource unit comprising the first resource unit comprises:
   mapping, starting from the first resource unit in the slot, the second-stage SCI in the PSSCH to the at least one second resource unit comprising the first resource unit in an order of frequency domain followed by time domain and in an ascending index order.

3. The method of claim 1, wherein mapping, starting from the first resource unit in the slot, the second-stage SCI in the PSSCH to the at least one second resource unit comprising the first resource unit comprises:
   preferentially mapping, starting from the first resource unit in the slot, the second-stage SCI in the PSSCH to at least one fourth resource unit comprising the first resource unit, wherein at least one of the PSSCH DMRS or a Physical Sidelink Control Channel (PSCCH) exists on a symbol where the fourth resource unit is located, and the at least one second resource unit comprises the at least one fourth resource unit.

4. The method of any one of claims 1 to 3, further comprising:
   adjusting a code rate offset of the second-stage SCI to cause the at least one second resource unit for mapping the second-stage SCI to not overlap with the symbols for sending the SL PRS.

5. The method of any one of claims 1 to 3, further comprising:
   in a case that the at least one second resource unit does not overlap with the symbols for sending the SL PRS, if remaining second-stage SCI exists after mapping the second-stage SCI to the at least one second resource unit, dropping the remaining second-stage SCI.

6. The method of any one of claims 1 to 3, wherein
   in a case that the at least one second resource unit partially overlaps with the symbols for sending the SL PRS, a mapped SL PRS in an overlapped portion is covered by the second-stage SCI in the at least one second resource unit.

7. The method of claim 6, wherein
   in a symbol corresponding to the overlapped portion, a mapped SL PRS that is not covered by the second-stage SCI in the at least one second resource unit is allowed to be covered by the portion, in the PSSCH, not comprising the second-stage SCI.

8. The method of any one of claims 1 to 7, further comprising:
   mapping the SL PRS to the symbols for sending the SL PRS before mapping, starting from the first resource unit in the slot, the second-stage SCI in the PSSCH to the at least one second resource unit comprising the first resource unit.

9. The method of any one of claims 1 to 8, wherein

time domain positions of the symbols for sending the SL PRS are determined by a Media Access Control (MAC) layer or a physical layer of the terminal from candidate time domain positions in a resource pool, or are determined by the physical layer of the terminal from candidate time domain positions in the resource pool based on a first number of symbols; and

the candidate time domain positions are preconfigured or configured by a network, and the first number of symbols is a minimum number of symbols determined by the MAC layer for sending the SL PRS.

10. The method of claim 9, wherein
symbols corresponding to the candidate time domain positions do not comprise a symbol that is available for sending the second-stage SCI.

11. The method of claim 9 or 10, wherein
in a case that the time domain positions of the symbols for sending the SL PRS are determined by the MAC layer, the time domain positions of the symbols for sending the SL PRS determined by the MAC layer do not comprise a symbol that is available for sending the second-stage SCI.

12. The method of claims 1 to 3, wherein

time domain positions of the symbols for sending the SL PRS are determined by a Media Access Control (MAC) layer or a physical layer of the terminal, or are determined by the physical layer of the terminal based on a first number of symbols; and
a Physical Sidelink Control Channel (PSCCH), the PSSCH DMRS, a DMRS of the PSCCH (PSCCH DMRS), or a mapped second-stage SCI does not exist on the symbols for sending the SL PRS, and the first number of symbols is a minimum number of symbols determined by the MAC layer for sending the SL PRS.

13. The method of claim 12, wherein
the time domain positions of the symbols for sending the SL PRS are determined after mapping the second stage SCI to the at least one second resource unit.

14. The method of any one of claims 9 to 13, wherein the time domain positions of the symbols for sending the SL PRS are determined based on a number of symbols for sending the SL PRS and a starting symbol position; and
in a case that the time domain positions of the symbols for sending the SL PRS are determined by the physical layer based on the first number of symbols, the number of symbols for sending the SL PRS determined by the physical layer is greater than or equal to the first number of symbols.

15. The method of any one of claims 1 to 8, wherein

time domain positions of the symbols for sending the SL PRS are determined by a physical layer of the terminal; or
a number of symbols for sending the SL PRS is determined by a Media Access Control (MAC) layer of the terminal, a starting symbol position of the symbols for sending the SL PRS is determined by a physical layer of the terminal based on the number, and the number is less than or equal to a number of consecutive symbols available for sending the SL PRS in the slot.

16. The method of claim 15, wherein
a Physical Sidelink Control Channel (PSCCH), the PSSCH DMRS, or a DMRS of a PSCCH (PSCCH DMRS) does not exist on the symbols for sending the SL PRS.

17. The method of any one of claims 9 to 16, wherein
the time domain positions of the symbols for sending the SL PRS are determined based on a number of symbols for sending the SL PRS and a starting symbol position.

18. The method of any one of claims 1 to 17, wherein

a time domain position of the PSSCH DMRS in the slot is determined based on at least one pattern, of the PSSCH DMRS, in the resource pool, and the at least one pattern is preconfigured or configured by a network; and
in the at least one pattern, of the PSSCH DMRS, preconfigured or configured by the network, N symbols that do not comprise the Physical Sidelink Control Channel (PSCCH) exist between symbols on which a first PSSCH DMRS and a second PSSCH DMRS are located, wherein N is an integer, greater than or equal to 0, preconfigured or configured by the network.

19. The method of claim 18, wherein
the N symbols that do not comprise the PSCCH do not overlap with the symbols for sending the SL PRS.

20. The method of any one of claims 1 to 5, wherein
the at least one third resource unit does not overlap with the symbols for sending the SL PRS.

21. The method of any one of claims 1 to 20, wherein
the at least one second resource unit and the at least one third resource unit are not occupied by the PSSCH DMRS, a Physical Sidelink Control Channel (PSCCH), a DMRS of a PSCCH (PSCCH DMRS), or a Phase-Tracking Reference Signal (PT-RS).

22. The method of any one of claims 1 to 21, wherein
the slot further comprises first-stage SCI, and at least one of the first-stage SCI or the second-stage SCI comprises a bit field for indicating a format of the second-stage SCI.

23. The method of claim 22, wherein
in the second-stage SCI, the bit field for indicating the format of the second-stage SCI comprises a last bit field in the second-stage SCI.

24. An apparatus for resource mapping, comprising:

a first mapping unit, configured to map, starting from a first resource unit in a slot, second-stage Sidelink Control Information (SCI) in a Physical Sidelink Shared Channel (PSSCH) to at least one second resource unit comprising the first resource unit, wherein a Demodulation Reference Signal (DMRS) of the PSSCH (PSSCH DMRS) exists on a symbol where the first resource unit is located, and the at least one second resource unit does not overlap or partially overlaps with symbols for sending a Sidelink Positioning Reference Signal (SL PRS); and
a second mapping unit, configured to map a portion, in the PSSCH, not comprising the second-stage SCI to at least one third resource unit that does not comprise the second-stage SCI.

25. The apparatus of claim 24, wherein the first mapping unit is specifically configured to:
map, starting from the first resource unit in the slot, the second-stage SCI in the PSSCH to the at least one second resource unit comprising the first resource unit in an order of frequency domain followed by time domain and in an ascending index order.

26. The apparatus of claim 24, wherein the first mapping unit is specifically configured to:
preferentially map, starting from the first resource unit in the slot, the second-stage SCI in the PSSCH to at least one fourth resource unit comprising the first resource unit, wherein at least one of the PSSCH DMRS or a Physical Sidelink Control Channel (PSCCH) exists on a symbol where the fourth resource unit is located, and the at least one second resource unit comprises the at least one fourth resource unit.

27. The apparatus of any one of claims 24 to 26, further comprising:
an adjustment unit, configured to adjust a code rate offset of the second-stage SCI to cause the at least one second resource unit for mapping the second-stage SCI to not overlap with the symbols for sending the SL PRS.

28. The apparatus of any one of claims 24 to 26, further comprising:
a dropping unit, configured to, in a case that the at least one second resource unit does not overlap with the symbols for sending the SL PRS, if remaining second-stage SCI exists after mapping the second-stage SCI to the at least one second resource unit, drop the remaining second-stage SCI.

29. The apparatus of any one of claims 24 to 26, wherein
in a case that the at least one second resource unit partially overlaps with the symbols for sending the SL PRS, a mapped SL PRS in an overlapped portion is covered by the second-stage SCI in the at least one second resource unit.

30. The apparatus of claim 29, wherein
in a symbol corresponding to the overlapped portion, a mapped SL PRS that is not covered by the second-stage SCI in the at least one second resource unit is allowed to be covered by the portion, in the PSSCH, not comprising the second-stage SCI.

31. The apparatus of any one of claims 24 to 30, further comprising:
a third mapping unit, configured to map the SL PRS to the symbols for sending the SL PRS before mapping, starting from the first resource unit in the slot, the second-stage SCI in the PSSCH to the at least one second resource unit comprising the first resource unit.

32. The apparatus of any one of claims 24 to 31, wherein

time domain positions of the symbols for sending the SL PRS are determined by a Media Access Control (MAC) layer or a physical layer of the terminal from candidate time domain positions in a resource pool, or are determined by the physical layer of the terminal from candidate time domain positions in the resource pool based on a first number of symbols; and
the candidate time domain positions are preconfigured or configured by a network, and the first number of symbols is a minimum number of symbols determined by the MAC layer for sending the SL PRS.

33. The apparatus of claim 32, wherein
symbols corresponding to the candidate time domain positions do not comprise a symbol that is available for sending the second-stage SCI.

34. The apparatus of claim 32 or 33, wherein
in a case that the time domain positions of the symbols for sending the SL PRS are determined by the MAC layer, the time domain positions of the symbols for sending the SL PRS determined by the MAC layer do not comprise a symbol that is available for sending the second-stage SCI.

35. The apparatus of claims 24 to 26, wherein

time domain positions of the symbols for sending the SL PRS are determined by a Media Access Control (MAC) layer or a physical layer of the terminal, or are determined by the physical layer of the terminal based on a first number of symbols; and
a Physical Sidelink Control Channel (PSCCH), the PSSCH DMRS, a DMRS of a PSCCH (PSCCH DMRS), or a mapped second-stage SCI does not exist on the symbols for sending the SL PRS, and the first number of symbols is a minimum number of symbols determined by the MAC layer for sending the SL PRS.

36. The apparatus of claim 35, wherein
the time domain positions of the symbols for sending the SL PRS are determined after mapping the second stage SCI to the at least one second resource unit.

37. The apparatus of any one of claims 32 to 36, wherein the time domain positions of the symbols for sending the SL PRS are determined based on a number of symbols for sending the SL PRS and a starting symbol position; and
in a case that the time domain positions of the symbols for sending the SL PRS are determined by the physical layer based on the first number of symbols, the number of symbols for sending the SL PRS determined by the physical layer is greater than or equal to the first number of symbols.

38. The apparatus of any one of claims 24 to 31, wherein

time domain positions of the symbols for sending the SL PRS are determined by a physical layer of the terminal; or
a number of symbols for sending the SL PRS is determined by a Media Access Control (MAC) layer of the terminal, a starting symbol position of the symbols for sending the SL PRS is determined by a physical layer of the terminal based on the number, and the number is less than or equal to a number of consecutive symbols available for sending the SL PRS in the slot.

39. The apparatus of claim 38, wherein
a Physical Sidelink Control Channel (PSCCH), the PSSCH DMRS, or a DMRS of a PSCCH (PSCCH DMRS) does not exist on the symbols for sending the SL PRS.

40. The apparatus of any one of claims 32 to 39, wherein
the time domain positions of the symbols for sending the SL PRS are determined based on a number of symbols for sending the SL PRS and a starting symbol position.

41. The apparatus of any one of claims 24 to 40, wherein

a time domain position of the PSSCH DMRS in the slot are determined based on at least one pattern, of the PSSCH DMRS, in the resource pool, and the at least one pattern is preconfigured or configured by a network; and in the at least one pattern, of the PSSCH DMRS, preconfigured or configured by a network, N symbols that do not comprise the Physical Sidelink Control Channel (PSCCH) exist between symbols on which a first PSSCH DMRS and a second PSSCH DMRS are located, wherein N is an integer, greater than or equal to 0, preconfigured or configured by a network.

42. The apparatus of claim 41, wherein
the N symbols that do not comprise the PSCCH do not overlap with the symbols for sending the SL PRS.

43. The apparatus of any one of claims 24 to 28, wherein
the at least one third resource unit does not overlap with the symbols for sending the SL PRS.

44. The apparatus of any one of claims 24 to 43, wherein
the at least one second resource unit and the at least one third resource unit are not occupied by the PSSCH DMRS, a Physical Sidelink Control Channel (PSCCH), a DMRS of a PSCCH (PSCCH DMRS), or a Phase-Tracking Reference Signal (PT-RS).

45. The apparatus of any one of claims 24 to 44, wherein
the slot further comprises first-stage SCI, and at least one of the first-stage SCI or the second-stage SCI comprises a bit field for indicating a format of the second-stage SCI.

46. The apparatus of claim 45, wherein
in the second-stage SCI, the bit field for indicating the format of the second-stage SCI comprises a last bit field in the second-stage SCI.

47. A terminal, comprising: a processor and a memory, wherein the memory is configured to store a computer program, and the processor is configured to call and execute the computer program stored in the memory to perform the method of any one of claims 1 to 23.

48. A chip, comprising: a processor for calling and executing a computer program in a memory to cause a device on which the chip is mounted to perform a method of any one of claims 1 to 23.

49. A computer readable storage medium for storing a computer program that causes a computer to perform a method of any one of claims 1 to 23.

50. A computer program product, comprising computer program instructions that cause a computer to perform the method of any one of claims 1 to 23.

51. A computer program that causes a computer to perform the method of any one of claims 1 to 23.

*sl-StartSymbol*

*sl-LengthSymbols*

Frequency

0 1 2 3 4 5 6 7 8 9 10 11 12 13

Time

PSCCH  PSSCH  PSFCH  GP  Symbols not available for SL

**FIG. 1**

GP

DMRS

DMRS

PSSCH
(data
part)

Second-
stage
SCI

DMRS
and
second-
stage
SCI

PSCCH

AGC

0  1  2  3  4  5  6  7  8  9  10  11  12  13

**FIG. 2**

FIG. 3

FIG. 4

FIG. 5

Slot 0 ◄─────────────► Slot 1

▦ DL symbol   ☐ Flexible symbol   ▪ UL symbol

**FIG. 6**

Comb size=2, RE offset=0

Comb size=2, RE offset=1

**FIG. 7**

| 0 | 1 | 2 | 3 | 4 | 0 | 1 | 2 | 3 | 4 | 0 | 1 | 2 | 3 | 4 | 0 | 1 | 2 | 3 | 4 |

0  1  2  3  4  5  6  7  8  9  10  11  12  13  14  15  16  17  18  19

─────►
$f$(RB)        ▩ IRB 0        ▦ IRB 1

**FIG. 8**

**FIG. 9**

60MHz carrier bandwidth

**FIG. 10**

Map, starting from a first resource unit in a slot, second-stage SCI in a PSSCH to at least one second resource unit comprising the first resource unit, wherein a PSSCH DMRS exists on a symbol where the first resource unit is located, and the at least one second resource unit does not overlap or partially overlaps with symbols for sending a SL PRS — S1101

Map a portion, in the PSSCH, not comprising the second-stage SCI to at least one third resource unit that does not comprise the second-stage SCI — S1102

**FIG. 11**

| AGC | Portion, in the PSSCH, not comprising the second-stage SCI | Second -stage SCI and PSSCH DMRS | Second -stage SCI / Portion, in the PSSCH, not comprising the second-stage SCI | SL PRS sent by the UE | PSSCH DMRS | Portion, in the PSSCH, not comprising the second-stage SCI | GP |
| PSCCH | | | | | | |

0   1   2   3   4   5   6   7   8   9   10   11   12   13

**FIG. 12**

**FIG. 13**

**FIG. 14**

**FIG. 15**

Apparatus for resource
mapping 1600

First mapping unit 1601

First mapping unit 1602

**FIG. 16**

Communication device 1700

Memory
1720

Processor
1710

Transceiver
1730

**FIG. 17**

Chip 1800

Input interface
1830

Processor
1810

Memory
1820

Output interface
1840

**FIG. 18**

## INTERNATIONAL SEARCH REPORT

| International application No. |
| --- |
| **PCT/CN2023/103392** |

### A. CLASSIFICATION OF SUBJECT MATTER

H04W64/00(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 侧行, 侧链路, 边链路, 控制信息, 定位参考信号, 第二阶, 第二级, 解调参考信号, 映射, 重叠, 打孔, sidelink, SL, SCI, 2-stage, 2nd, PRS, DMRS, map, overlap, punch

### C. DOCUMENTS CONSIDERED TO BE RELEVANT

| Category* | Citation of document, with indication, where appropriate, of the relevant passages | Relevant to claim No. |
| --- | --- | --- |
| Y | CN 110505703 A (SPREADTRUM COMMUNICATIONS (SHANGHAI) CO., LTD.) 26 November 2019 (2019-11-26)<br>description, paragraphs 57-61 and 98 | 1-51 |
| Y | CN 115643636 A (VIVO MOBILE COMMUNICATION CO., LTD.) 24 January 2023 (2023-01-24)<br>description, paragraphs 202-203 | 1-51 |
| A | CN 113079579 A (DATANG MOBILE COMMUNICATIONS EQUIPMENT CO., LTD.) 06 July 2021 (2021-07-06)<br>entire document | 1-51 |
| A | CN 114339987 A (SPREADTRUM COMMUNICATIONS (SHANGHAI) CO., LTD.) 12 April 2022 (2022-04-12)<br>entire document | 1-51 |
| A | WO 2023011347 A1 (DATANG GOHIGH INTELLIGENT AND CONNECTED TECHNOLOGY (CHONGQING) CO., LTD.) 09 February 2023 (2023-02-09)<br>entire document | 1-51 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 December 2023** | **19 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103392**

| Patent document cited in search report | | | Publication date (day/month/year) | Patent family member(s) | | | Publication date (day/month/year) |
|---|---|---|---|---|---|---|---|
| CN | 110505703 | A | 26 November 2019 | JP | 2022549961 | A | 29 November 2022 |
| | | | | US | 2022312401 | A1 | 29 September 2022 |
| | | | | WO | 2021063116 | A1 | 08 April 2021 |
| | | | | KR | 20220075385 | A | 08 June 2022 |
| | | | | EP | 4044725 | A1 | 17 August 2022 |
| CN | 115643636 | A | 24 January 2023 | WO | 2023001096 | A1 | 26 January 2023 |
| CN | 113079579 | A | 06 July 2021 | WO | 2021135853 | A1 | 08 July 2021 |
| CN | 114339987 | A | 12 April 2022 | WO | 2022068836 | A1 | 07 April 2022 |
| WO | 2023011347 | A1 | 09 February 2023 | CN | 115706627 | A | 17 February 2023 |

Form PCT/ISA/210 (patent family annex) (July 2022)